# EUROPEAN PATENT APPLICATION

(11) **EP 1 522 937 A1**
(43) Date of publication of application: **13.04.2005**
(21) Application number: 03022948.8
(22) Date of filing: 09.10.2003
(51) Int. Cl.: G06F 17/60

(54) **Apparatus, method and computer-program product for the clearing of transactions stemming from exchanges**

(71) Applicant: DEUTSCHE BÖRSE AG, 60487 Frankfurt am Main (DE); SWX Swiss Exchange, 8021 Zurich (CH)
(72) Inventor: Chiesa, Orlando, 6315 Oberägeri (CH); Gisler, Daniel, 5454 Bellikon (CH); Rüter, Dirk, 65779 Kelkheim (DE); Wellenbeck, Michael, 60318 Frankfurt am Main (DE); Haaf, Gerd, 65779 Kelkheim (DE); Merkelbach, Alexander, 61194 Niddatal (DE)
(74) Representative: Grünecker, Kinkeldey, Stockmair & Schwanhäusser Anwaltssozietät

(57) **Abstract**

The present invention relates to a clearing link connecting a plurality of clearing houses for clearing and settling transactions stemming form a trading platform. The clearing link processes transaction data stemming from the trading platform to be forwarded to individual clearing houses. The clearing house(s) are selected based on a transaction data analysis and predefined forward conditions. A trade member is thus able to select a clearing house not directly linked to the market of the trade member.

## Description

The present invention relates to the settlement of transactions stemming from exchanges by the competent settlement authorities. Particularly, the present invention relates to a clearing link and method for interconnecting a plurality of clearing houses or linking an exchange to a plurality of clearing houses.

### BACKGROUND OF THE INVENTION

The trading of financial instruments or products has largely become a computer supported operation. Exchanges in form of electronic trading platforms allow all market participants to have an equal access to the trading platform, regardless of their geographic locations. Electronic trading platforms, in particular electronic exchanges, provide border entry, maintenance, matching and price determination functions. By entering orders into the electronic trading system, automatically matching same, the electronic trading system brings together different participants with different interests by automatically creating trade executions. By automatically matching executable orders, a transaction is concluded based on pre-defined contracts specifications. The two main types of contracts which are traded on a derivative exchange are futures and options.

For each executed order, a clearing house assumes as a central counter party one side of all open contracts. The clearing house becomes the buyer to each seller of a contract and a seller to each buyer. Thus, the clearing house guarantees to its members the facilitation of all open contracts, i.e. transactions. This process is known as novation.

In addition, the clearing house maintains derivative transactions during the life cycle of the contract and ensure the final performance of the obligation in the underlined cash product.

In order to ensure a safe and sound operation of the financial market, the clearing house performs a plurality of internal processes including risk management, position management, collateral management, delivery management and cash flow management.

Exchange trading, either floor based or electronically, is typically effected on a national/regional exchange. The exchange generally has a single clearing house either in form of a subsidiary of the exchange or in form of an independent entity associated thereto. However, the financial market becomes increasingly a global market, i.e. products are increasingly traded in a cross border manner. While the trading of cross border products is facilitated by electronic trading platforms, the settlement and cash flow of the underlying transaction product has to be performed in accordance with domestic rules prescribed by the country of origin of the underlying trading product.

The settlement of transactions based on cross border products requires an increased procedural effort. Each transaction has to be processed by two clearing houses, namely, first, by the clearing house associated to the trading platform and, second, by the clearing house of the home country of the underlying traded product. Thus, cross border products cause inefficient settlement procedures.

### SUMMARY OF THE INVENTION

Given these problems with the prior art techniques, the present invention aims to enable a settlement of transactions at the competent settlement authority.

Moreover, the present invention intends to enable a more efficient clearing and settlement of executed trades.

This is solved by the subject matter of the independent claims.

Preferred embodiments of the present invention are the subject matter of the dependent claims.

According to a first aspect, a clearing link apparatus connected to a plurality of clearing houses for selecting a clearing house therefrom to settle transactions stemming from an exchange is provided. A data capture unit receives transaction data of a transaction stemming from an exchange generating said transaction. A transaction router forwards said transaction data for settlement to a connected clearing house in accordance with said received transaction data.

According to a another aspect, a clearing link interface connected to a plurality of clearing houses for assigning a clearing house therefrom for settling transactions stemming from a trading platform generating said transactions is provided. A first means receives transaction data of a transaction stemming from a trading platform generating said transaction. A second means assigns said transaction data for clearing and settlement to a connected clearing house based on said received transaction data.

According to another aspect of the present invention, a method for connecting a plurality of clearing houses for clearing and settlement of transactions stemming from an exchange is provided. Transaction data stemming from the exchange generating said transaction are received. The transaction data are assigned for clearing and settlement to at least one of said plurality of clearing houses in accordance with said transaction data.

It is a particular advantage of the present invention that the clearing and settlement procedures for executed transactions are not solely handled by that clearing house associated to the trading platform. The transaction data can be handled by that clearing house being best suited therefor, for instance the clearing house associated to the traded product. In particular, cross border products can be settled by involving that clearing house able to operate under its established national infrastructure in order to avoid a duplication of hardware and processing capacities for settling procedures of individual countries.

Further, the present invention enables to clear and settle trades executed at an exchange by different clearing houses, and, consequently, enables the participants of different exchanges to always use the clearing house of their preference.

This may be achieved by either directly forwarding particular transaction data from an exchange to the respective clearing house or by assigning and forwarding the transaction data through the medium of a clearing house connected to the exchange generating the transaction data. The clearing house clearing and settling a transaction can provide the clearing and settling services as a facilitator for the clearing house directly connected to the exchange.

Preferably, the transaction data indicate a particular product underlying said transaction. Based thereon, the home country of the traded product can be identified and said transaction data assigned and forwarded accordingly.

According to a further embodiment, each clearing house operates in accordance with clearing and settlement procedures prescribed by the home country of the underlying product clearing house. Preferably, the transaction data are assigned to that clearing house of the plurality of clearing houses which operates under the settlement rules of the country of origin of the underlying product. The clearing house of the underlying product's home country is most familiar with the settlement rules to be applied. The transaction is consequently settled in an efficient manner by the clearing house of the product's home country.

Preferably, the transaction data forwarded to the clearing house of the product's home country comprise detailed transaction information.

According to a preferred embodiment, each exchange has associated thereto a clearing house as clearing and settlement platform. The transaction data are at least assigned and forwarded to that clearing house serving as the clearing and settlement platform for the exchange generating the transaction data.

Preferably, the clearing information included in said transaction data indicate the clearing house of the clearing member. Accordingly, the transaction data can be assigned and forwarded to the clearing member's clearing house.

Preferably, the transaction data are assigned to the clearing house of the clearing member. The clearing member's clearing house will thus be able to clear and settle all transaction stemming from a particular clearing member.

Preferably, the transaction data are assigned to the clearing house serving as clearing and settlement platform of the exchange generating the transaction data. The clearing house of the exchange will thus be able to monitor and lock the transactions stemming from the associate exchange.

According to a preferred embodiment, the transaction data are assigned and forwarded to a plurality of clearing houses, namely, the clearing house being the clearing and settlement platform of the exchange generating the transaction data, the clearing house of the clearing member and the clearing house operating under the settlement rules of the underlying product's home country.

The transaction can thus be settled in a most efficient manner as each of the clearing houses is performing those steps of the clearing and settlement procedure for which it is most qualified.

According to a particular approach, other clearing houses, namely the clearing house of the clearing member and the primary clearing house associated to the exchange, only mirror and/or process a minimum amount of mandatory data, for instance for representing the counter party to the individual clearing member involved.

Preferably, the individual data containers are generated to be forwarded to the respective clearing houses. Each of the data containers can be configured individually to match the respective clearing house's requirements.

According to a preferred embodiment, the additionally transaction data of cash moves are captured. The present invention is thus not restricted to trades of products but can also increase the efficiency in handling cash moves.

Preferably, said transaction data contain product identification data, execution data and trading member data for each transaction. Based on these data, the additionally required information may be obtained and used for forwarding the respective transaction information to the different clearing houses.

According to a preferred embodiment, the clearing apparatus comprises a translator component receiving the transaction data obtained from a plurality of connected exchanges and converting the received data into a predetermined data format. Irrespective of any particular data format or amount of data transmitted by individual exchanges, the received data are transformed into a common data format including a predetermined set of required information. None of the connected exchanges needs to adapt its present data format, data obtaining procedures and data forwarding procedures. Hence, foreign exchanges can be easily connected to the clearing link apparatus of the present invention.

Preferably, the translator component comprises a database of relevant identification data. The translator component enriches individual parts of the transaction data. For this purpose, the translation component comprises a database which includes relevant identification data. By retrieving additional identification data from the database, the translator component completes the identification information of the received transaction data. In this manner, the present invention prepares the transaction data for smooth processing by the connected clearing houses. The data may thus prepared in accordance with individual requirements of the respective clearing houses.

Preferably, the indications of each transaction data are completed with respect to the relevant clearing identifications and/or trading member identification.

According to a preferred embodiment, the clearing apparatus comprises a product translator component. The product translator component enriches the received transaction data by product specific data. The present invention thus supports a subsequent processing by the clearing houses, for instance, the product specific data may indicate the product's home country and thus enable a correct assignment and forwarding of the respective transaction data.

According to a preferred embodiment, the present invention translates all transaction date data from the plurality of different exchanges into a common date format. By connecting exchanges and clearing houses spread all over the world, each of the connected institutions has its own time standard with respect to the applicable world time zone. In order to enable comparable time indications, for instance, execution dates of an underlying product, the date data are transformed into a comparable date format.

Preferably, the common date format is further transformed into the date format of the connected clearing house before transferring said data to the clearing house. Thus, each clearing house and exchange connected to the clearing link apparatus of the present invention can operate and process the transaction data in its conventional manner.

Preferably, the received date data is reviewed based on pre-stored holiday data for each of the connected exchanges and clearing houses in order to calculate comparable execution date data applicable for all connected clearing houses.

Based on the above features, exchanges and clearing houses spread all over the world can be integrated into a common transaction data settlement system although each connected institution may belong to different time zones and may be subject to individual national holidays.

Preferably, the present invention comprises a transaction data completor component receiving the transaction data and additional data which individually enrich parts of the transaction data. The received transaction data can thus be enriched individually for each data portion thereof in order to complete the transaction data for the specific subsequent processing purposes.

The received transaction data are analyzed with respect to the underlying product, the transaction member and the clearing member. Based on the result of the analysis, at least one data container is generated containing a selection of the completed transaction and to be forwarded to a clearing house. A data container configured for an individual clearing house consequently takes the requirements of the individual clearing house into account in order to enable a smooth processing of the forwarded transaction data.

Preferably, the present invention provides different data containers to be forwarded to different clearing houses. The different data containers comprise different subsets of said completed transaction data. Each connected clearing house involved in the settlement of said transaction will thus receive those data of said completed transaction data required for its clearing and settlement purposes.

Preferably, the clearing house of the product's home country receives detailed transaction data for the settling procedure of the transaction in accordance with the required national rules, while the clearing house of the clearing member and the clearing house of the exchange (i.e. the primary clearing house) only receive those data required for their individual accounting and risk management purposes.

According to preferred embodiment, the clearing link apparatus of the present invention further comprises a trouble shooter component receiving undeliverable transaction data from the transaction router. Upon receiving an undeliverable transaction data, an alarm is initiated.

Preferably, the present invention further comprises a quality reviewer for reviewing processed transaction data. Upon detecting unmatched transaction details, an alarm is initiated. Thus, the present invention ensures reliability and a failsafe behavior of the clearing and settlement procedures, in particular regarding the distribution of the transaction data to the respective clearing house.

According to a preferred embodiment, the clearing link apparatus of the present invention receives next day transaction data. The next day transaction data represent those transaction data for clearing houses being in a non-operable state. The collection of next day transaction data at the clearing link apparatus enables a monitoring of clearing and settlement orders which accumulate during a non-operable state of a clearing house. Settlement procedures can thus be initiated irrespective of a world wide location of an exchange generating a transaction and a clearing house clearing and settling said transaction.

Preferably, the next day transaction data are monitored by a risk manager calculating a risk for the non-operable clearing house arising from the accumulated next day transaction data. The monitoring of a risk during non-operable time periods ensures a smooth and reliable world wide clearing and settlement of transactions.

Preferably, said risk manager initiates an alarm when said calculated risk exceeds a predefined risk level.

Preferably, prior to entering a non-operable state, all positions which accumulate during a predefined time period at a clearing house, for instance per trading day, are captured by the clearing link apparatus and checked against transactions data stemming from other clearing houses on their reliability and correctness.

### DESCRIPTION OF THE DRAWINGS

In the accompanying drawings, preferred embodiments of the present invention are described in more detail. The drawings are not to be construed as limiting the present invention to only the illustrated and described examples of how the invention can be made and used. Further features and advantages will become apparent from the following and more particular description of the invention which is illustrated in the accompanying drawings, wherein:
- Fig. 1: is a block diagram illustrating clearing houses connected to an exchange in a conventional manner;
- Fig. 2: is a block diagram illustrating the clearing apparatus of the present invention connected to different exchanges and clearing houses;
- Fig. 3: is a another block diagram illustrating the clearing link apparatus of the present invention connected to a plurality of exchanges and clearing houses;
- Fig. 4: is a block diagram illustrating the internal configuration of the clearing link apparatus of Fig 3;
- Fig. 5: is a block diagram illustrating additional details of the clearing apparatus of Fig. 4;
- Fig. 6: is a block diagram illustrating additional details of the clearing apparatus of Fig 4;
- Fig. 7: is a flow chart illustrating the linking method of the present invention;
- Fig. 8: is a block diagram illustrating the linking method of the present invention as shown in Fig. 7 in more detail;
- Fig. 9: is a diagram illustrating an example of a possible configuration of operable and non-operable time periods of clearing houses spread all over the world;
- Fig. 10: is a flow chart illustrating a particular embodiment of the present invention comprising additional components for detecting and preventing a risk arising from transaction data intended for non-operable clearing houses;
- Fig. 11: is a block diagram illustrating a possible hardware configuration for implementing the present invention,

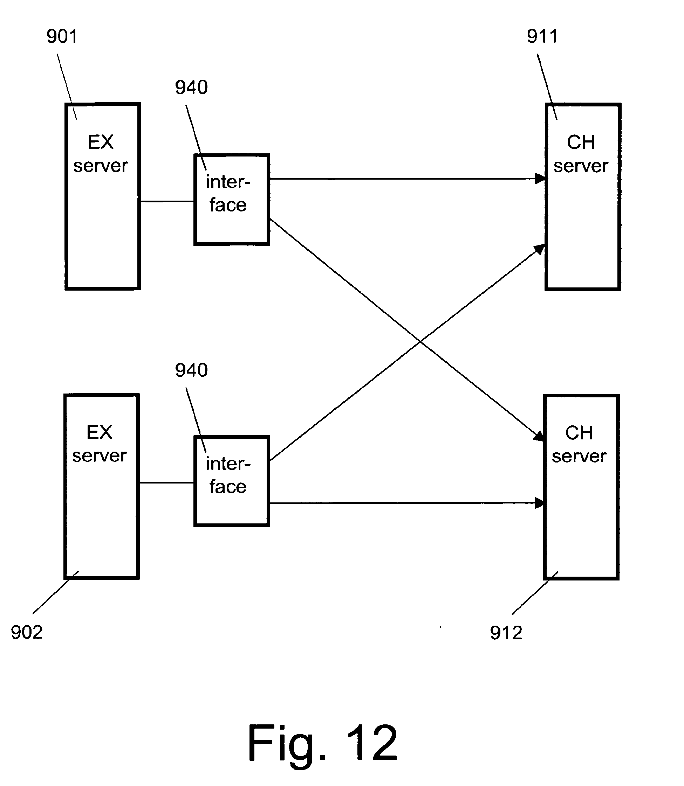

- Fig. 12: is a block diagram illustrating another possible hardware configuration for implementing the present invention comprising individual clearing link interfaces arranged at each of the plurality of exchanges,
- Fig. 13: illustrates in block diagrammatical form the accounting structures of two example clearing houses in different countries determining the settlement directors internal logic for configuring data containers and assigning said data containers to different clearing houses,
- Fig. 14: is a block diagram illustrating a peer-to-peer relationship between clearing houses for settling trades in the most efficient manner, and
- Fig. 15: illustrates in block diagrammatical form a particular example for implementing the basic architecture of the clearing link apparatus.

### DETAILED DESCRIPTION OF THE INVENTION

The different aspects of the present invention will be described in the following with reference to the accompanying figure drawings, wherein like elements and structures are designated by like numerals.

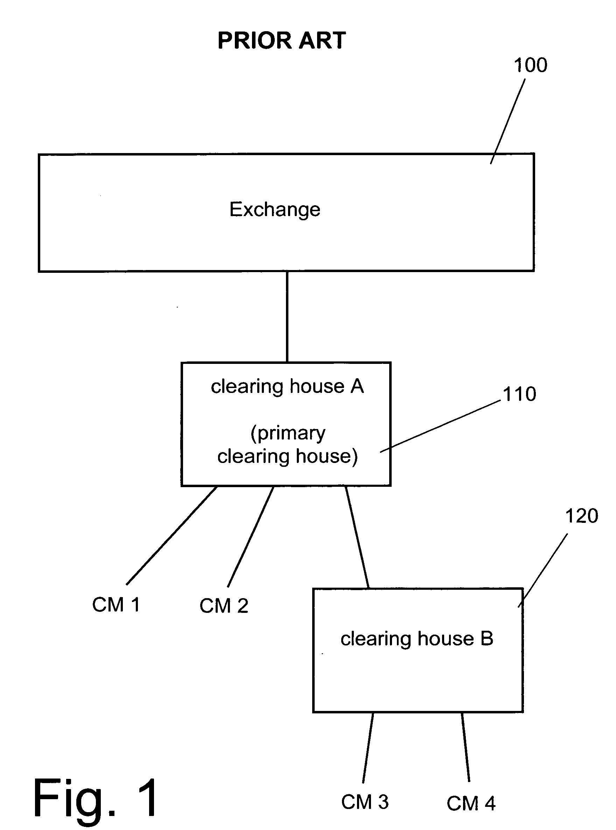

In Fig. 1, a conventional configuration of connecting an exchange 100 and an associated clearing house 110 is illustrated. The exchange 100 may be any of a plurality of different types of trading platforms, for instance floor trading platforms or electronic exchanges. A clearing house 110 represents the counter party for all trades executed at the exchange. An executed trade represents an agreement between the participants exchanging a good. A good comprises at least one of a cash equity, a bond product, a derivative and a re-purchase agreement.

When an order is executed, a clearing house as a central counter party guarantees the facilitation of the trade for each involved party. Although a party may be participant at the market, i.e. at the exchange 100, and at the clearing house 110, in the following participants of the exchange and the clearing house are differentiated as being trading members at the market and trading members at the clearing house (clearing members). The term clearing member will be used throughout the following description although different clearing houses use individual expression therefore. For instance, the Eurex Clearing AG (ECAG) further differentiates between "general clearing members" and "direct clearing members" and at The Clearing Corporation (TCC) clearing members are referred to as "clearing member firms". Moreover, the US CTFC regulations use the term "futures commission merchant" (FCM) in the same respect.

As shown in Fig. 1, clearing members CM1, CM2 are participants of the primary clearing house 110, i.e. clearing house A of a first country. Clearing house B (clearing house 120) of another country which has its own clearing members CM3, CM4 is also participant at the primary clearing house 110 of the exchange 100. As the clearing members CM3 and CM4 are not directly a member at the primary clearing house 110, but only through clearing house 120, the primary clearing house 110 only provides a single "omnibus account" for clearing house 120 as the responsible participant for the primary clearing house 110 for clearing members CM3 and CM4. Clearing house 120 fulfils the obligations of the clearing members CM3 and CM4.

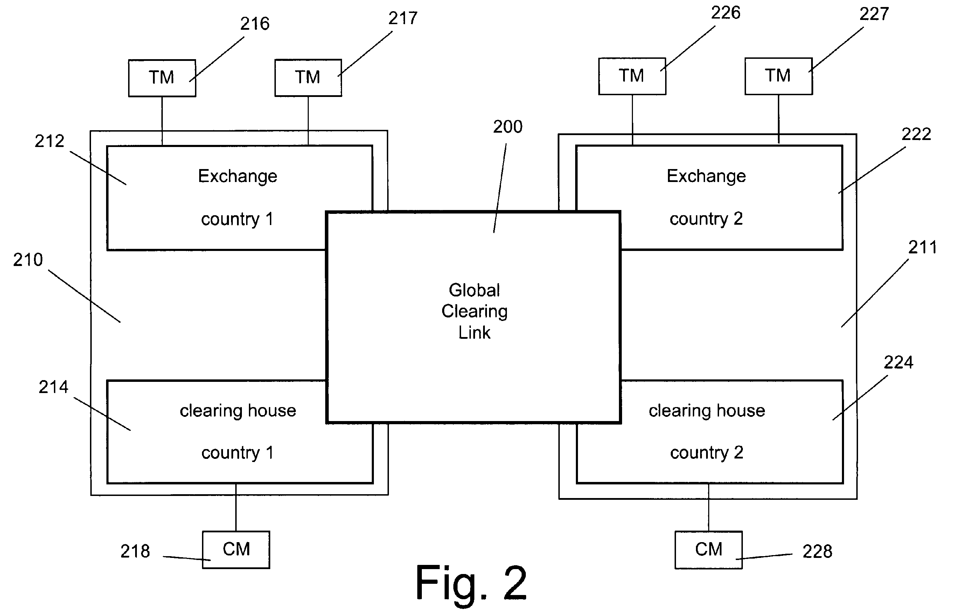

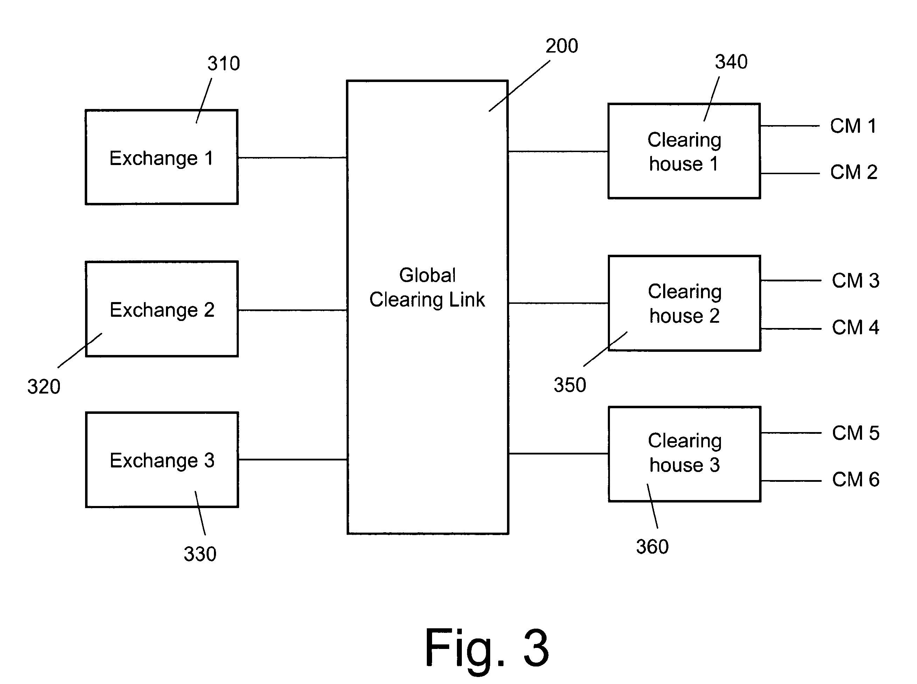

The general configuration of the clearing link apparatus of the present invention is illustrated in Fig. 2 and Fig. 3. The clearing link apparatus 200 is connected, on the one hand, to a plurality of exchanges, for instance exchange 212 of country 1 and exchange 222 of country 2. On the other hand, the clearing link apparatus 200 is connected to respective clearing houses, i.e. clearing house 214 (country 1) and clearing house 224 (country 2). The executed trades of the connected exchanges 212, 222 between market participants 216, 217, 226, 227 result in corresponding transaction data. The relevant transaction data from the executed trades are forwarded to one of clearing houses 214, 224 for clearing and settling the trades.

The clearing house 214, 224 involved in clearing and settling a trade operates under its established (national) infrastructure. The clearing house monitors, calculates and covers risks and overviews open positions. Further, clearing houses processes exercises, assignments, notifications, allocations, corporate actions, trade management functionalities and outputs settlement instructions to associated settlement organizations. Such settlement organizations may be central security depositories (CSDs), custodian banks, central and corresponding banks.

A respective configuration of a clearing link apparatus connecting exchanges and clearing houses is illustrated in Fig. 3. A plurality of exchanges 310, 320, 330 which may be located in different countries all over the world are connected to the clearing apparatus 200. The clearing link apparatus captures all trades executed at the exchange 310, 320, 330. After processing the captured data, clearing link apparatus 200 forwards relevant transaction data to one or more of the connected clearing houses 340, 350, 360. The clearing houses 340, 350, 360 are also connected to the single clearing link apparatus 200 - irrespective of their location on the world. The transaction data forwarded to each of the clearing houses 340, 350, 360 enables the clearing house to operate under its establishment clearing and settlement structure.

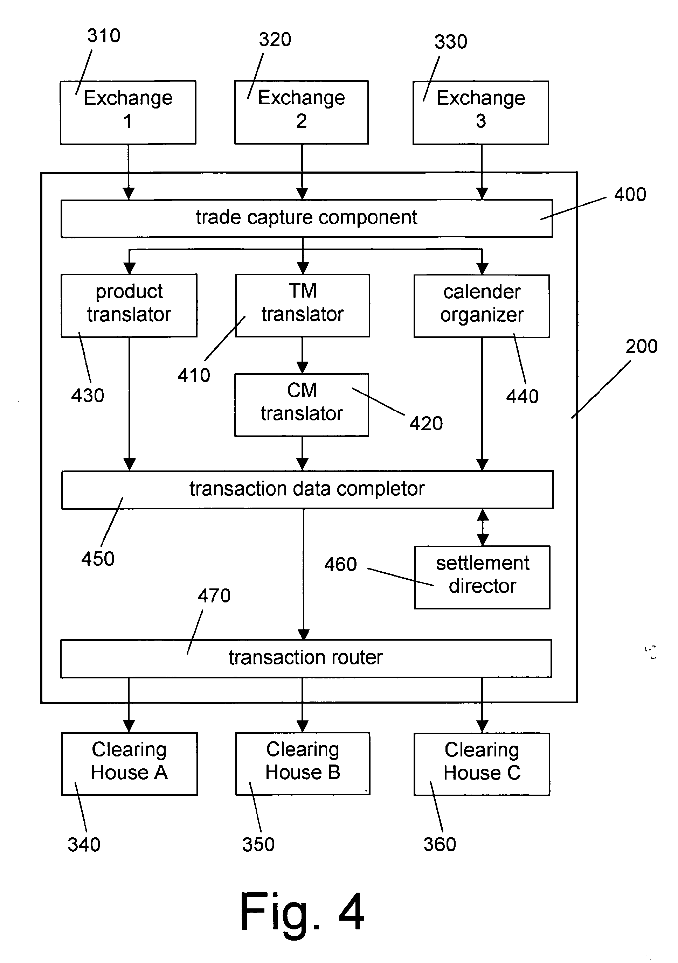

An internal configuration of the clearing link apparatus 200 is illustrated in Figs. 4, 5 and 6. As shown in Fig. 4, the clearing link apparatus comprises a trade capture component 400, a product translator component 430, trade member translator 410, a clearing member translator 420, a calendar organizer 440, a transaction data completor 450, a settlement director 460 and a transaction router 470.

The trade capture component 400 receives any transaction stemming from a connected trading platform, i.e. one of the exchanges 310, 320, 330. The transaction may relate to a traded product or to cash moves. Further, the trade capture component 400 captures transactions from associated clearing houses regarding give-ups and position transfers. The trade capturing is performed irrespective of the origin of the captured data, of the data layout, and the data contents.

The trade capture component 400 breaks the captured transaction data into interim data containers for further individual processing by the translator components 410, 420, 430 and the calendar organizer component 440. These interim container transport all basic transaction data like product identification data, execution date data and trade member information.

The TM translator component 410 comprises a database for all trading members of all trading platforms 310, 320, 330 connected to the clearing link apparatus 200. In order to facilitate any further processing, the trade member (TM) translator component 410 builds a relationship among identical trade members at different trading platforms 310, 320, 330. The trade member translator component 410 receives transaction data from the trade capture component 400, namely, the interim data container intended fort the trade member translator component 410.

The trade member translator component 410 enriches the received transaction data by unique and other market specific identifications. The enriched transaction data is forwarded to the clearing member (CM) translator 420.

In order to be able to enrich the received data, the trade member translator component 410 is automatically fed the underlying data from the participating clearing houses and trading platforms.

The clearing member translator component 420 receives those transaction data enriched by the trade member translator component 410. The clearing member translator component 420 adds the relevant clearing member identifications to the received transaction data. For this purpose, the clearing member translator component comprises a database storing all associated clearing member identification in relation to a trading member.

The enriched transaction data are forwarded to the transaction data completor component 450.

In order to be able to add the required clearing member identifications, the database of the clearing member translator component 420 is automatically provided with the underlying data from the participating clearing houses and trading platforms.

Another interim data container is forwarded by the trade capture component 400 to the product translator component 430. A database provided in the product translator component 430 contains identification data of all products traded at all trading platforms 310, 320, 330 connected to the clearing link apparatus 200. In order to facilitate the further processing of the transaction data, the underlying products of each transaction are detected from the received transaction data and a relationship is created among the same products.

The product translator component 430 enriches the product portion of the received data. A transaction data is enriched with a unique as well as other market specific identifications. The enriched data is forwarded to the transaction data completor 450.

The database of the product translator component 430 is automatically provided with all underlying data relating to the participating clearing houses 340, 350, 360 and trading platforms 310, 320 and 330.

Another interim data container is forwarded from the trade capture component 400 to the calendar organizer component 440. The calendar organizer component 440 comprises a database containing all dates relating to the time of execution and date of execution regarding all trading platforms 310, 320 and 330 connected to the clearing apparatus 200. While the received dates and points of time are maintained within the received transaction data, the calendar organizer component 440 converts the time and date data into a new common format ensuring a correct clearing and settlement of the respective transactions irrespective of the location of the trading platform and of the clearing houses. The received time and date data are enriched by the converted time and date data and are transported to the transaction data completor 450.

The database of the calendar organizer component is automatically provided with the respective time and date data from all participating clearing houses 340, 350, 360 and trading platforms 310, 320 and 330.

The individual parts of the captured transaction data are separately enriched by the product translator component 430, the trade member translator component 410, the clearing member translator component 420 and the calendar organizer component 440. The enriched data is individually forwarded to the transaction data completor 450. The transaction data completor 450 receives the individually enriched transaction data components and creates based on the received transaction data components referencing the same transaction into a single full enriched transaction data. The combined transaction data is sent to the settlement director 460.

The settlement director 460 receives the completed transaction data from the transaction data completor 450. The settlement director analyses the received transaction data, in particular with respect to the underlying product identifications, the trade member identifications and the clearing member identifications. Based on the result of the analysis, the settlement director forms three data containers from the completed transaction data. Each data container representing individual subsets of the received transaction data.

A first container is prepared in accordance with the detected product underlying the transaction and its home country clearing house. A second data container is formed in accordance with the detected clearing house of the execution platform generating the transaction. A third data container is built in accordance with the designated clearing member identification of the trade member. In the following, first, second and third data containers are denoted as "product container", "clearing house container" and "CM container".

The product container comprises all data relating to the underlying product of the transaction. Further, the first data container includes identifications regarding the home country clearing house of the underlying product and regarding the clearing member together with clearing member identifications of the home country clearing house.

The clearing house container includes data relating to the designated clearing house of the exchange and designated sub reference identifications of the clearing house.

The CM container is formed based on data indicating the designated clearing member of the trade member as well as the associated clearing house the clearing member belongs to.

All data containers formed by settlement director 460 are forwarded back to the transaction data completor 450. The settlement director has thus created individual data packets to be separately forwarded to the respective destinations, comparable to a switch board.

Although the respective data containers are preferably forwarded back to the transaction data completor 450 for transmission to the individual clearing houses, alternatively, settlement director 460 may directly forward the data containers to the transaction router 470 itself.

The transaction router 470 receives the data containers, namely the product container, the clearing house container and the CM container, either from the transaction data completor 450 or alternatively, from settlement director 460. The received data containers are forwarded to the relevant clearing houses 340, 350, 360. The product container is forwarded to the product's home country clearing house, while the clearing house container is sent to the clearing house associated to the exchange generating the transaction and the CM container is transmitted to the clearing house designated by the clearing member.

The clearing house of the home country of the product underlying the transaction receives the most detailed data in order to be able to settle the transaction in accordance with its national settlement rules. The other clearing houses receiving the clearing house and CM containers only received those data necessary to perform the required accounting and risk management procedures on their sides.

In case one of the other designated clearing houses is identical to the product's home country clearing house, those data containers are omitted. For instance, only a single product container is transmitted to a clearing house if the clearing house is the product's home country clearing house as well as the clearing house associated with the trading platform and the clearing house designated by the clearing member. If alternatively the clearing houses of the clearing house container and the CM container are identical, only the CM container is forwarded to the common clearing house while the clearing house container is omitted.

In summary, in case there is more than one data container to be sent to the same clearing house, only one of the data containers is forwarded while the other or others are omitted in accordance with a predefined priority of data containers. The product container posses priority over all of the other data containers and will not be omitted.

In contrast, the clearing house container has the lowest priority and will always be omitted in case of a conflict.

The transaction router 470 transmits the completed transaction data to the individual clearing houses in order to enable same to clear and settle the transaction in accordance with their individual infrastructure. The clearing houses are thus able to process the transactions at the clearing houses only with those accounts and/or sub accounts within their conventional account structure. The processing of the transaction with the individual clearing houses is executed in accordance with their individual standard procedure.

While all clearing houses operate in accordance with their standard routines, all transactions processed by the clearing houses are based on the processing instructions created by the clearing link apparatus. In particular, the standard processing procedures within the clearing houses in terms of cash flows and settlements of clearing members are operated in accordance with the home country principle, i.e. in direct relation with the clearing house associated with the underlying product and the associated settlement process. As a result, the clearing houses depend on each other with regard to cash flows and settlements. The clearing link apparatus interacts with the settlement processes at the clearing houses whereas the clearing link apparatus, in particular, the settlement director, is responsible for a sound triggering of cash flows and settlements of the underlying products.

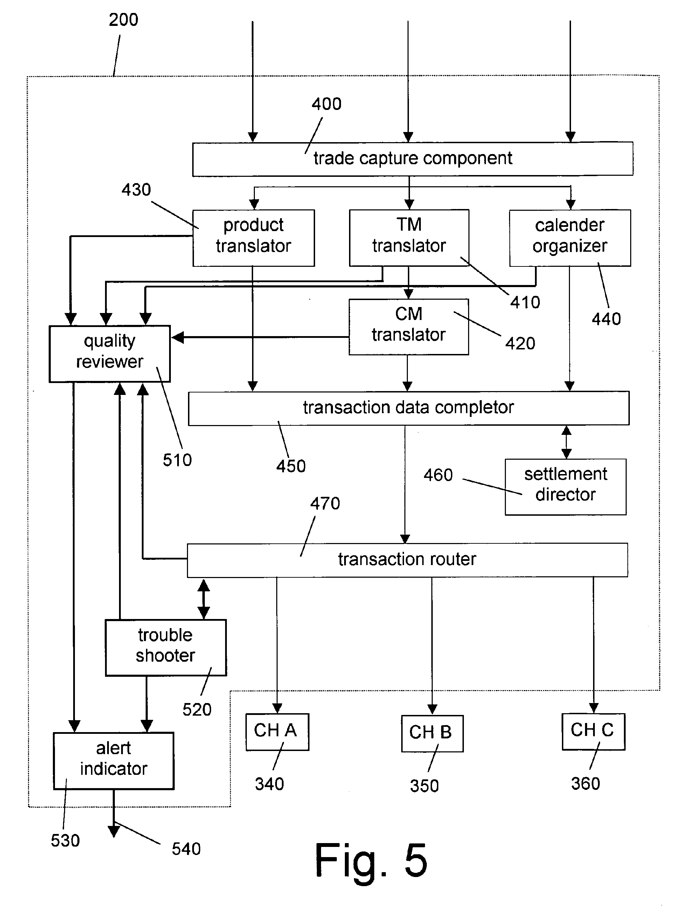

A more detailed configuration of a preferred embodiment is illustrated in Fig. 5. The illustrated configuration differs from the previously described by a quality reviewer 510, a trouble shooter 520 and an alert indicator 530. These components enable a correct operation of the triggering components and initiate an alarm upon detecting any processing failure.

The quality reviewer 510 is connected to the product translator 530, the trade member translator 510, the clearing member translator 520, the calendar organizer 440 and the transaction router 470.

Quality reviewer 510 receives the data from all connected components in order to perform a double check and cross check with respect to the correctness of the relevant elements of a transaction. If any of the checked data cannot be validated, the quality reviewer transmits the unmatched transaction details from the product translator 430, the trade member translator 410, the clearing member translator 420, the calendar organizer 440 and/or the transaction router 470 to the alert indicator 530. In response thereon, the alert indicator 530 initiates an alarm 540 preferably by informing a switch board for manual interruption of the settlement processing.

Trouble shooter 520 is connected to the transaction router 470 and receives any undeliverable transaction from the transaction router 470. In turn, trouble shooter 520 initiates an alarm 540 via alert indicator 530 and the quality reviewer 510. After an alert has been notified to the alert indicator 530, and a completion has to be sent to the transaction router 470, a manual interruption processing of the transaction is carried out by trouble shooter 520.

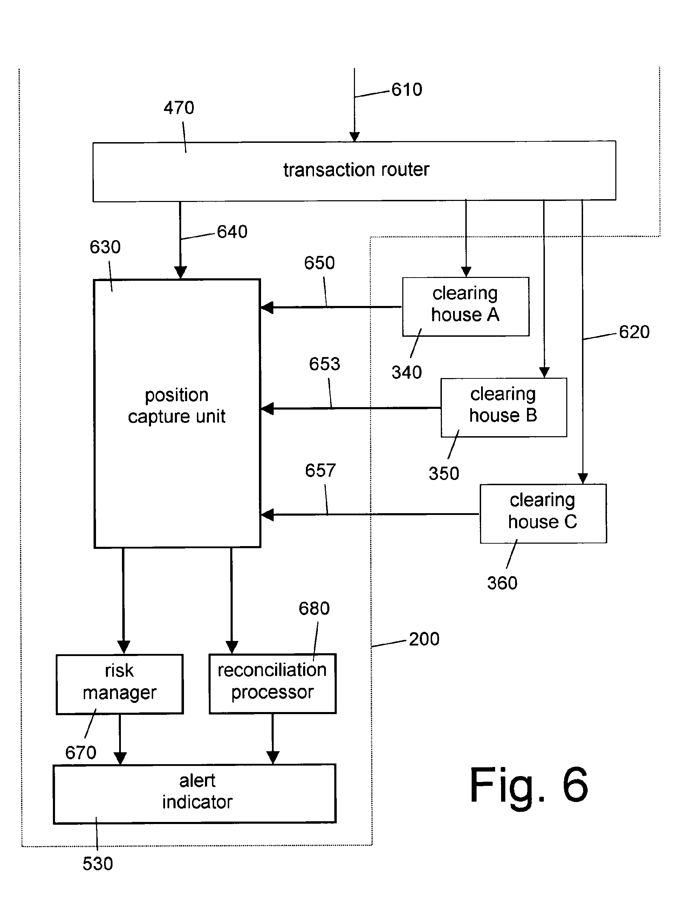

The additional components illustrated in Fig. 6 serve to ensure a smooth and correct processing operation of the clearing apparatus 200. In order to enable a trading and settlement of executed trades on world wide basis, the clearing link apparatus has to bridge non-operable periods of individual clearing houses by accumulating transaction data for such clearing houses stemming from operable trading platforms in other time zones. For this purpose, the clearing link apparatus 200 comprises a position capture unit 630, a risk manager 670 and a reconciliation processor 680.

Position capture unit 630 is connected to transaction router 470, and individual clearing houses 340, 350, 360. Position capture unit 630 receives end of the day position, collaterals and cash flows from the connected clearing houses 340, 350, 360. Further, position capture unit 630 receives uncollected next day transactions for the connected clearing houses from transaction router 470. The received end of day positions/next day transactions for the connected clearing houses are analyzed and broken down to clearing members and/or by grouping technical clearing members to overall position for the respective clearing house. The accumulated positions for the clearing members are transferred to risk manger 670 for evaluation of any potential risk. In addition, the data is forwarded to reconciliation processor 680.

Risk manager 670 receives the accumulated positions from position capture unit 630 and calculates a risk on a clearing member basis and/or a clearing house basis. The calculated risk information is made available to each relevant clearing house 340, 350, 360. The risk manager is operating 24 hours for permanently receiving captured position data and to ensure a continuous performance of risk measurements for non-operative clearing houses.

The reconciliation processor 680 receives the accumulated data of the connected clearing houses from position capture unit 630. The data received in connection with the individual clearing house is compared to those of other clearing houses. Any surplus is broken down to its basics and made available for analysis and correction within the clearing house processes.

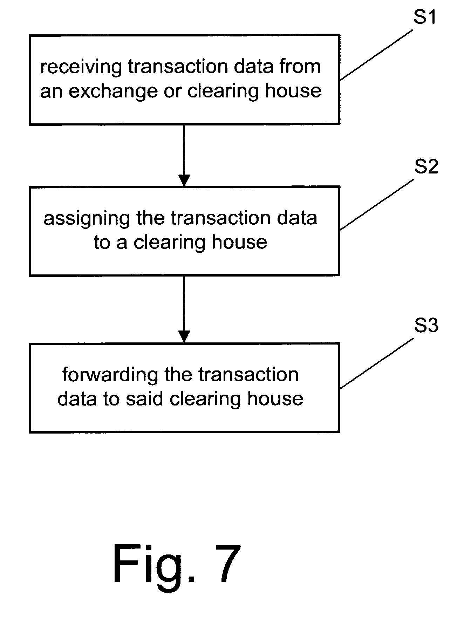

The operation of the present invention will now be described in connection with figures 7 to 10.

In order to support the clearing and settlement of executed transactions between two or more clearing houses, the clearing link apparatus electronically captures all kinds of executed trades at two or more derivatives exchanges or over-the-counter exchanges (Step S1). The captured transaction data is assigned (step S2) and forwarded (step S3) to the chosen clearing house under consideration of the associated clearing house obligation of the originating market place. The assignment step ensures that each involved clearing house is able to operate under its established infrastructure. Further, market participants of different exchanges are able to use the clearing house of their choice.

Alternatively, the data of the executed trades are captured by the clearing houses connected to the exchange generating the transaction. The "Primary Clearinghouse" will forward the transaction data to best suited clearing house for settlement.

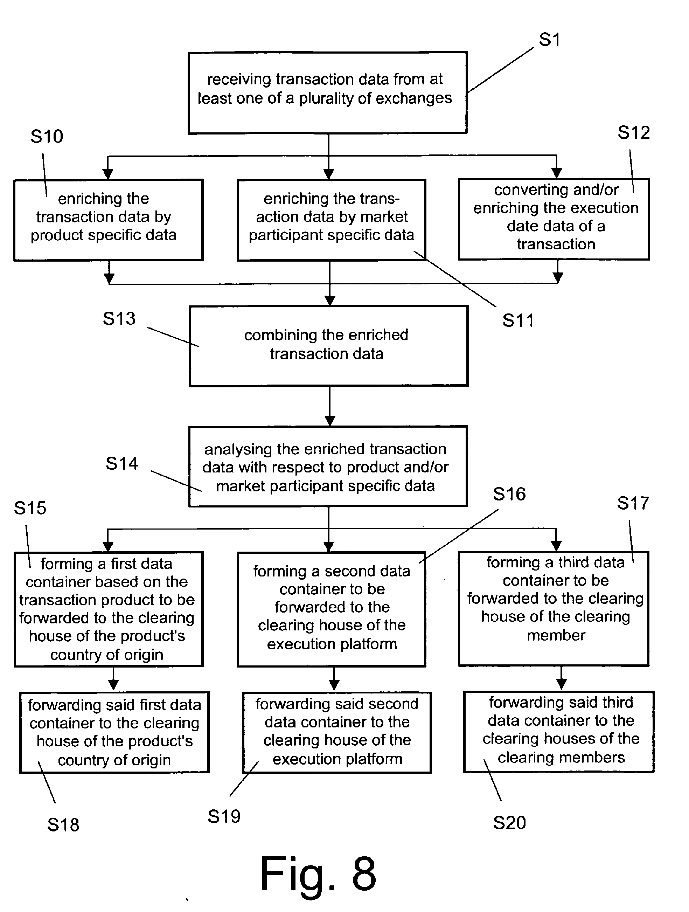

A more detailed flowchart illustrating the operation performed by the clearing apparatus of the present invention is shown in Fig. 8. The transaction data received from at least one of the plurality of connected trading platforms, i.e. exchanges (step S1), are forward for individually enriching parts of each received transaction data.

All transaction data which may stem from different trading platforms, each having its individual data format, are converted into a common data format. The transaction data enriched by product specific data including additional product identifications (step S10). Further, the received transaction data is enriched by market participant specific data (step S11). In addition, the execution date data of each transaction is converted into a common time format and enriched accordingly. The individually enriched parts of each transaction are combined forming enriched transaction data (step S13). Alternatively, the individual enrichment steps S10 -S13 are executed in a subsequent manner.

The enriched transaction data of each transaction is analyzed with respect to product and/or market participant specific data (step S14). Based on the results of the analysis, individual data containers are formed (steps S15 to S17). A first data container is formed based on the product underlying the transaction (step S 15) .The first data container is indented to be forwarded to the clearing house of the product's country of origin. A second data container to be forwarded to the clearing house of the execution platform is formed in step S15. A third data container is formed in step S17. The third data container is intended to be forwarded to the clearing house of the clearing member.

Each of the first to third data containers created from the completed transaction data is subsequently forwarded to the individual clearing houses. The first data container is forwarded to the clearing house of the product's country of origin (step S18), the second data container to the clearing house of the execution platform (step S19), and third data container to clearing house of the clearing member (step S 20).

When forming the individual data containers, the data may be converted in order to match the individual data format of the connected clearing house. Each clearing house is able to operate under its established infrastructure for monitoring, calculating and covering a risk, overviewing of open positions, processing exercises, assignments, notifications, allocations, cooperate actions, trade measurement functionalities and output settlements instructions to associated settlement organizations.

Based on the present invention, market participants of different exchanges all over the world are able to use the clearing house of their choice. The present invention ensures a 24 hour operability of the clearing and settlement process regarding the plurality of clearing houses connected by the clearing apparatus to the plurality of trading platforms.

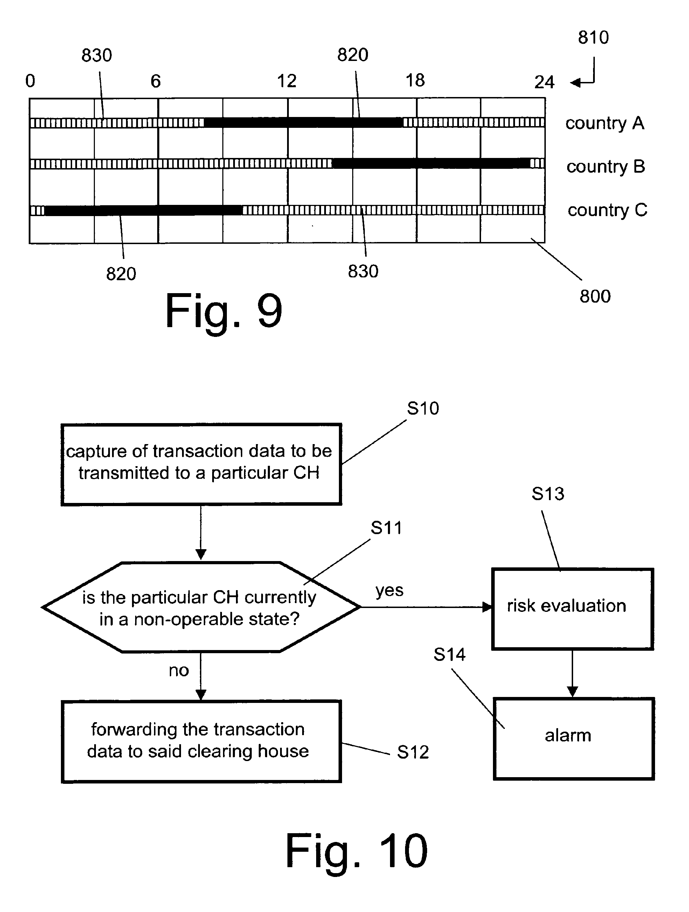

The problems arising from trading platforms and clearing houses located within different time zones is illustrated in Fig. 9. The different operational and non-operational states of exchanges and clearing houses with respect to each other are shown on the basis of a common time axis 800. The individual operational and non-operational time periods are projected from their individual country time to the common time base 800 with the common time indicated by hours 810.

The example of Fig. 9 comprises three countries being operational at different time zones of the world. The operational state is indicated by reference number 820 and the non-operational time period by reference number 830. As can be seen therefrom, transaction data stemming from a trading platform of country B cannot be settled at the same time by a clearing house located in country C. While the clearing house in country C is in an non-operational state 830 the trading platform of country B is at the same time in an operational state 820.

In order to ensure a 24 hour operability of the clearing process, the transaction data to be transmitted to a particular clearing house are captured (step S10). The clearing link apparatus then decides whether or not a particular clearing house is in a operable or a non-operable state (step S11). In case the particular clearing house of the transaction data under consideration is in an operable state, the transaction data is forwarded to that clearing house as described in connection with Fig. 7 and Fig. 8 (step S12). If however, the clearing house to which the transaction data under consideration is to be forwarded is in a non-operable state, a risk evaluation is performed (step S13). In case the measured risk for a particular clearing member and/or clearing house exceeds a predetermined level, an alarm is initiated (step S14) in order to enable respective processes to cope with arising risks, either for manual or automatic operation.

The described clearing mechanism is based on the consolidation of products at the clearing house of the country of origin of an underlying product and ensures a single clearing house per exchange - irrespective of the choice of clearing house by the trade members. Clearing houses which are located outside of the country of origin of the underlying product, may become secondary party of products of another country cleared by another clearing house. Trade members trading, for instance, US products are now able to use an outside US clearing house, for example, a European clearing house. Similar, trade members trading European products are able to use a US clearing house. Market participants do not realize the different clearing houses involved in the clearing and settlement process of executed trade.

The clearing link apparatus is conceptualized for clearing houses in order to settle all types of products, e.g. cash equity and bond products, derivatives, repurchase agreements (repo, commodities like energy, electricity, etc.).

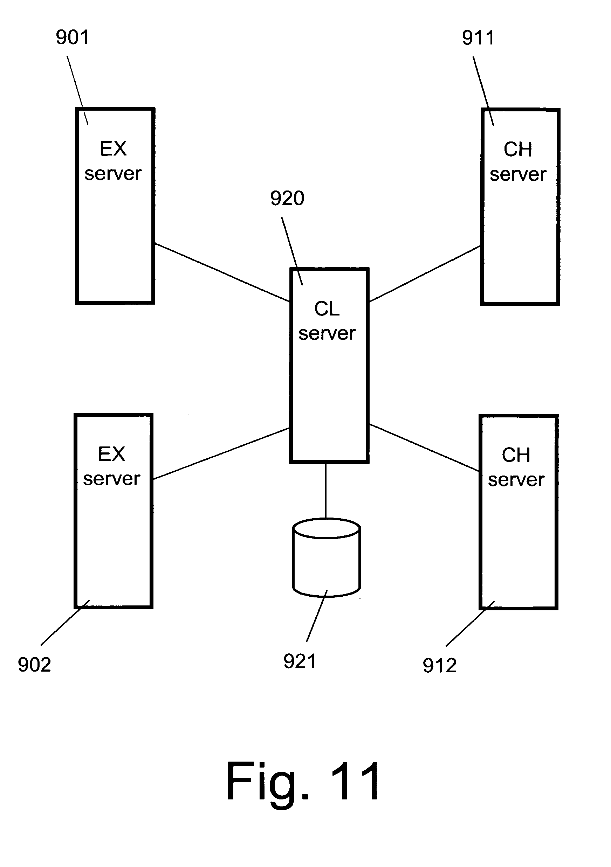

The internal configuration which has until now been described with respect to different processing components of the clearing link apparatus 200, may be realized either in form of hardware or software processing elements. In accordance with a preferred embodiment of the present invention as shown in Fig. 11, the processing elements are realized in form of software components on a clearing link server 920. the data required for the different processing steps may be provided by a database 921 arranged internal or external to the clearing link server 920. The clearing link server is connected on the one hand side to the plurality of trading platforms 901, 902, and on the other hand to the plurality of clearing houses 911, 912. The trading platforms 901, 902 and the clearing house 911, 912 are realized in electronic form as symbolized by the EX servers 901 and 902 and the CH servers 911 and 912 in Fig 11. Also not shown in Fig. 11, the individual servers may have separate I/O units providing external connection to other devices. The connections may be realized in electronic form by wire/wireless telecommunication services or based on a packet based transmission.
According to another alternative implementation, the clearing link apparatus of the present invention in realized in form of clearing link interfaces 940 which are individually provided at each of the exchanges. In contrast to the implementation of Fig. 11, each interface only captures the trades executed at the connected exchange 901, 902, respectively. In order to ensure a reliable processing of the clearing operation, the interfaces can be connected in order to exchange the relevant information. Each of the interfaces 940 comprises the individual components as described above.

In a further alternative implementation, the each interface is not directly connected to an individual exchange, but through its associated primary clearing house.

Summarizing, the present invention relates to a clearing link apparatus connecting a plurality of trading platforms and a plurality of clearing houses. The clearing link apparatus processes transaction data stemming from the connected trading platforms to be forwarded to individual clearing houses. The clearing house(s) are selected based on a transaction data analysis and predefined forward conditions. A trade member is thus able to select a clearing house not directly linked to the market of the trade member. Domestic cash and settlement flows of a clearing house within a location of the product are leveraged. Further, the clearing apparatus ensures one global open interest of a product within the home country of the product without influencing the ownership of the open interest in the clearing house associated to the relevant market place. This ensures that the exercises and assignments, notifications and allocations are executed within the entire open interest and by employing the best available pool.

In addition, the clearing link apparatus ensures that cash flow and settlements are processed in a direct and most efficient way while employing the home country principle. Clearing members have a free choice of clearing houses, enabling clearing members to use the jurisdiction and service provider of their choice. By employing the clearing link apparatus of the present invention, the number of intermediary services is reduced and the overall costs for the participants are reduced.

In the following, details of particular embodiments will be described in connection with an example implementation of a clearing link apparatus connected to exchanges and clearing houses in two countries.

The exchange and clearing house of the first country is assumed to be the Eurex Exchange and the Eurex Clearing AG which has been formed as the clearing house for all Eurex transactions. Thus, it automatically becomes the central counterparty for all trades executed at the Eurex Exchange. In turn, Eurex Clearing AG is directly connected with various International CSDs (Central Security Depositories). This implies that the clearing house not only assumes the counterparty risk for all market participants, but also simplifies settlement processes for the clearing members whilst at the same time guaranteeing anonymity from trading to settlement.

The exchange of the second country is assumed to be a US based Futures Exchange (in the following denoted as Eurex US). As the exchange would be located in the United States, it falls under CTFC regulations. Products to be traded at Eurex US are interest rate futures (T-Bonds, T-Bills, etc.), US index products and the options on those futures, and Euro denominated products. For all trades in all products that are executed at Eurex US, The Clearing Corporation (TCC) becomes the central counterparty.

In accordance with the present invention, a clearing house link can be established between the European clearing house ECAG and the US clearing house TCC for cross continental clearing. The clearing link allows NCMs (Non-Clearing-Members) or trading members to transact upon a given exchange and clear this activity at the clearing house of their choice. For this purpose, each clearing house becomes a "special treating member" of the other clearing house and shall establish an omnibus account at the other clearing house to hold trades in connection with the link. When providing sub-accounts within the omnibus account, that will be held at the level of the clearing member of the other clearing house, additional services can be provided.

The cross continental trading results in a number of advantages. Each clearing member has the free choice of an individual clearing house for clearing an executed trade. Further, Non-Clearing-Members are in a position to freely select a clearing member. When establishing a clearing link, cost savings for the set up and maintenance of an additional clearing infrastructure in a new country can be achieved. The efficiency of the clearing process can be increased by an appropriate choice of the regulatory environment. Further, the trade of an individual product is not limited to the operational hours of a particular exchange or clearing house, but can be executed and cleared in different time zones.

In order to achieve these advantages, the clearing house link apparatus has to assure that, firstly, US products can either be cleared in the primary clearing house TCC or in the linked clearing house ECAG and, secondly, CFTC approved Euro products which are executed at Eurex US or at Eurex can either be cleared in ECAG or in TCC.

In order to facilitate the further explanation, the following particular clearing house and clearing member expressions are defined.

The "primary clearing house" is the single clearing house associated to the exchange as the execution platform thereof. Thus, TCC is the primary clearing house for all trades executed at Eurex US and all products listed on Eurex US, while ECAG is the primary clearing house regarding all trades executed on Eurex and listed at Eurex .

A "linked clearing house" processes trades executed on an exchange wherein the linked clearing house is not the primary clearing house. ECAG is the linked clearing house regarding trades executed on Eurex US in any Eurex US listed contract, and TCC is the linked clearing house regarding trades executed on Eurex and Eurex listed contracts.

The "home country clearing house" is the clearing house located in the country of the product underlying of a transaction. Therefore, TCC is the home country clearing house for trades in US denominated products - irrespective whether the trade was executed on Eurex US or Eurex. In contrast, ECAG is the home country clearing house for those trades in Euro denominated products - irrespective whether or not the trade was executed on Eurex US or Eurex.

The "destination clearing house" is the clearing house to which the clearing member is admitted to. ECAG is the destination clearing house for all ECAG clearing members while TCC is the destination clearing house for all TCC clearing members.

A linked clearing house is set up as a "special clearing member" at the primary clearing house. For this purpose, an omnibus account at the primary clearing house holds all cross-border trades in connection with the linked clearing house. The omnibus account of the special clearing member will be used for trades in those products where the special clearing member is the home country clearing house. Further, the omnibus account may comprise a sub-structure for "technical clearing members".

As a sub-structure to the special clearing member, a "technical clearing member" will be set up in the primary clearing house that represents the clearing members of the special clearing member. The accounts that are held for these "technical clearing members" are only used to mirror trades and products when the special clearing member is not the home country clearing house of the contract, i.e. when the primary clearing house is also the home country clearing house.

By establishing a clearing link when forwarding transactions to both clearing houses, in particular, the delivery and cash management is processed with high efficiency. The cash and delivery management makes use of the knowledge, infrastructure expertise of each clearing house in the delivery process for the respective underlying product. Regarding the clearing and settlement of European products, ECAG supports or services TCCs obligations towards their clearing members and TCC supports the same processes for various products towards ECAG members.

In addition, each clearing house facilitates payment flows for other clearing houses in the respective currencies. Consequently, the complete cash management process and delivery management process is handled for European products by the ECAG system. On the other hand, TCC will support the cash and delivery process in US products in their own members and on behalf of ECAG for the members of ECAG.

Thus, both clearing houses respectively make use of the existing and proven infrastructure of the other clearing house instead of creating an own infrastructure in a non-familiar foreign environment.

The increase in efficiency is particularly achieved by applying the "home country principle" to the largest extent possible. In accordance therewith, product characteristics and related processes are based on their specification in their domestic market. Based on the underlying home country for each traded product, individual rules are set in the following areas: product characteristics and series generation, master settlement prices, end of clearing day (accounting cut), exercise at the assignment processing, notification and allocation procedure, delivery management, banking facilities (cash debit and credit), holiday calendars.

Further, irrespective of where and by whom the trade is executed, the post trade process functionality is performed in the destination clearing house of the clearing member. In accordance with the described example of two involved clearing houses, a Eurex NCM clearing through a TCC clearer has to submit his adjustments to TCC. Based on the clearing member location, the following processing rules are set: trade and position management, give-up and take-up processing, risk management and reporting Preferably, any post trading activity is replicated to the home country product clearing house.

With the global clearing link and the home country principal it is also possible that certain post-trading functions, e.g. give-up/take up, position transfers, position management might be retained in the home country clearing house infrastructure on behalf of the destination clearing house, instead of duplicating such infrastructures in the destination clearing house, if functionalities are missing.

The clearing of an trade executed on an exchange means that every trade originating in the exchange trading system is immediately split up into two trades - one between the seller and the clearing house (as the buyer) and one between the clearing house (as the seller) and the buyer. This process is known as novation. Both trades are subsequently cleared and settled in the usual manner.

In accordance with the present invention, novation at the primary clearing house takes place at the point in time a trade is matched at the exchange. The primary clearing house becomes party to all transactions executed at this directly related exchange. For instance, TCC becomes party to all transactions executed at Eurex US , while ECAG becomes party to all transactions executed at Eurex.

A second novation takes place in parallel and simultaneously at the linked clearing house for every transaction that is designated for being cleared over the clearing link.

While the simultaneous novation process triggers a clearing house to become directly counterpart to a transaction, either as a primary clearing house or as a linked clearing house, the home country clearing house can also become a counterpart to a transaction. Such novation occurs when neither the primary clearing house nor the linked clearing house is the home country clearing house. For instance, a Eurex US transaction in a Eurex US traded Eurex contract wherein both clearing members clear at the TCC will be mirrored to ECAG as the home country clearing house. Thus, for TCC both legs of a transaction will be booked on the one hand on the clearing member's account, but at the same time a counter-posting will be made on the omnibus account of ECAG at the special clearing member. In this manner, ECAG becomes a counterparty to TCC for both legs of a transaction with the net obligation being zero.

The configuration and forwarding of individual data containers to the respective clearing houses is accomplished by settlement director 460 which has been described in connection with Fig. 4. For this purpose, the connected clearing houses provide an account structure which is included in form of underlying control logic in settlement director 460. The common account structure allows to account for transactions and positions transferred via the clearing link, and on the other hand allows the connected clearing houses to apply with the individual regulatory requirements. Particular, both clearing houses, the TCC as well as the ECAG have independent recording keeping approaches based upon regulatory requirements and market practices.

Each clearing house sets up an account structure allowing maintaining accounts for the partner clearing organization and its members. Such an account structure allows to mirror those transactions that are required to be transferred via the clearing link of the present invention. For this purpose, both clearing houses will approve the partner clearing organization as a "special clearing member". Where the clearing house mirrors transactions of its partner clearing house (special clearing member) in foreign products, i.e. those products with a special clearing members as a home country clearing house, transactions will be kept in an omnibus account which is maintained for the partner clearing house. When the clearing house submits transactions of its partner clearing house (the special clearing member) in its home country products, i.e. those products where the clearing house is a home country clearing house, these transactions will be mirrored by setting up the clearing member of the partner clearing organization as at technical clearing member in its own system. Both, the omnibus account and all technical clearing member accounts make up the transactions of the partner clearing house.

Referring to the particular examples of a US and European clearing house, the TCC will set up ECAG as a special clearing member and maintain an omnibus account for a clearing activity in European product. Eurex general clearing members (GCM's) clearing in US products would be maintained as technical GCMs within the TCC system. In a corresponding manner, ECAG will set up TCC as a special clearing member and will maintain an omnibus account for clearing activity in US products.

Clearing members of the TCC clearing European products will maintain a technical GCMs within the ECAG system.

Further, trading activity in European products of Eurex US NCMs using an Eurex clearing member would be mirrored on the omnibus account at TCC. However, detailed position keeping will only performed at ECAG. For trading activities in US products of Eurex US NCMs using a ECAG clearing member, a booking of the transaction is performed on the level of the ECAG clearing member and in addition, the ECAG further books a counter transaction on the omnibus account within the Eurex system to keep the system in balance. On the other hand, TCC keeps both sides of the transaction on a detailed level.

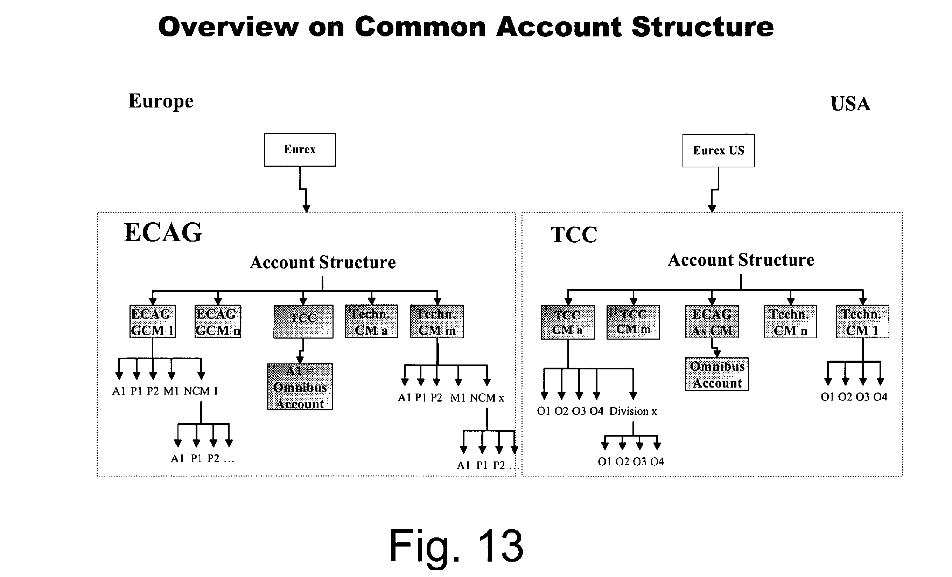

A sub-account structure supporting position management and regulatory reporting is maintained for each GCM. In the ECAG system, each technical US-GCM has an agent, proprietary and market making account. For mirroring the TCC account structure, only two accounts are actually in use, an A1 account to mirror origin O1 and a P2 account in order to mirror origin 02 as shown in the common account structure of Fig. 13.

Divisions of the US-GCM are set up at NCMs in ECAG. However, brokers related to the US-GCM or a division cannot be fully mirrored in the ECAG by a separate account. In contrast, all transaction of floor brokers are kept in the A1 account and all transactions of house brokers are kept in the P2 account.

In the TCC system ,each technical ECAG GCM/DCM is represented as a "Firm" with NCMs represented as "divisions". The set up of technical ECAG clearing members is only a requirement for US products. The ECAG system differentiates between "real" clearing members and technical clearing members. This requires to disable functions and processes that do not apply to the technical clearing member, for instance, triggering of automated cash booking for fees.

According to the common account structure which is illustrated in Fig: 13 only those clearing members participating in cross-border business or trade in home country products of the other clearing house are "mirrored" in the partner clearing house.

The account mapping structure is the basis for the settlement director's 460 logic to assign and configure data containers to be forwarded to individual clearing houses.

In order to allow for correct transaction processing throughout the clearing functions, both account structures of TCC and ECAG are mapped in the clearing link apparatus of the present invention. Different mapping mechanisms apply depending on the direction of the transaction flow. Basically, the mapping mechanisms follow the following rules. The destination clearing house of the clearing member determines the "target account structure". The target account structure is that account structure in which the destination clearing house is to be mapped into. The "accounting method" is also determined by the destination clearing house contract with the clearing member. The accounting method comprises indications like origin codes vs. account indicator, gross vs. net method.

The posting of trades to the relevant clearing house and respective member accounts is facilitated by a unique account designator that identifies the NCM and respective GCM.

Trades executed at an exchange are captured and transmitted directly to the respective clearing house. In case a receiving clearing house is unable to process the transaction data, the transaction data will be held in a "gateway" within the clearing link apparatus until the clearing house is capable of receiving the transaction data. Thus, consistent data collection and dissemination procedures are provided enabling core functions relating to data integrity.

Trade management functions are performed in essentially the same manner as they are currently performed by a member's interaction with the primary clearing house utilizing existing mechanisms and procedures. Exceptions to this processing approach are mainly related to the area of cash and delivery management and to home country products of the partner clearing house.

As a general rule for a trade management functionality of the clearing house link , the trade management has to be performed in the clearing house of the clearing member. For instance, Eurex NCMs clearing via a ECAG clearing member use the ECAG's trade management functionality, whereas Eurex NCMs clearing via a TCC clearing member are not entitled to use ECAG's trade management functionality. On the other hand, Eurex US NCMs (Eurex US only) clearing via an ECAG clearing member does not have the Eurex infrastructure in place. Therefore, these NCMs are kept integrated on the clearing member's account so that the ECAG clearing member can use the trade management functionality.

If for whatever reason required for such activities the global clearing link foresees also the possibility that the destination clearing house uses the infrastructure of the home country clearing house. This is possible due to the requirement that any post-trading adjustment needs to be duplicated in the home country clearing house at the level of the technical accounts and therefore the home country clearing house can also operate as infrastructure provider for the destination clearing house.

The present invention is a applicable to all types of transactions, in particular exchange transactions which are matched at an exchange and post trading transactions, e.g. give-ups, positions transfers, exercise and assignments, notifications and allocations, split trades, open-close adjustments. All these types of transactions are processed by the same type of settlement director logic.

With respect to a margining and risk management, each clearing house calculates the margin requirements of the respective clearing members. For instance, the ECAG calculates margin requirements for the clearing members of the ECAG, and the TCC calculates the requirement for their clearing members. Each of the clearing houses uses an already established processing approach. The TCC uses a method named SPAN as its calculation method. Consequently, European products would be margined according to the SPAN method when cleared at the TCC in the US. On the other hand, ECAG utilizes a risk based margin method and a margin on US based products which are cleared in Europe are calculated accordingly.

An intra-day risk management processing takes two different situations into account. First, when the respective clearing house is fully operational, each clearing house monitors the intra-day-risk according to its existing and established standards. Second, when the respective clearing house is not fully operational, the clearing house is not able to apply the established standards due to a lack of system availability or staff attendance. During this term, different solutions for monitoring the counterparty's risk towards its clearing members are integrated into the clearing link apparatus of the present invention.

In accordance with the general description in connection with Fig. 9 and Fig. 10, the clearing link apparatus assists the other clearing houses in monitoring their exposure outside of normal working times. Alternatively, an interface associated to each of the clearing houses providing the clearing link operations with respect to an individual exchange/clearing house is providing this functionality. Thus, the risk management is out-sourced to different institutions for non-operational periods, while each clearing house is responsible itself for the risk monitoring of its clearing members.

Alternatively, a joint risk management is provided by the clearing link apparatus supporting each clearing house in monitoring of a risk arising during its off-hours. According to another implementation of the present invention, the global clearing link is realized by interconnecting a plurality of clearing houses. In modification of the previous description, the clearing house itself may forward transaction data to another clearing house. The clearing house which is connected to the exchange generating the transaction data forwards the transaction data for clearing and settlement to another clearing house. In this manner, the efficiency for performing clearing and settlement procedures may be increased considerably as already described in connection with the previous embodiments.

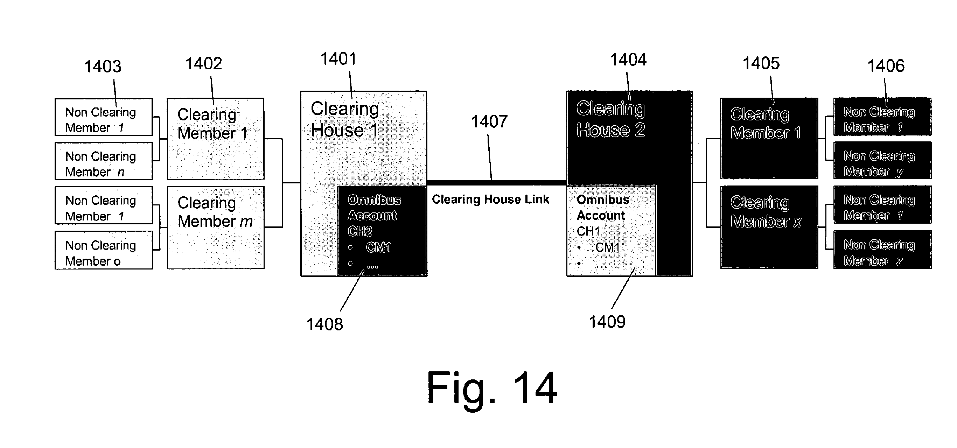

In a particular example of connecting two clearing houses is illustrated in Fig. 14. A first clearing house 1401 has connected thereto a plurality of clearing members, which, in turn, represents a plurality of non-clearing members 1403. In a corresponding manner, another clearing house 1404 is connected to a plurality of clearing members 1405 which, in turn, represents a plurality of non-clearing members 1406. Both clearing houses 1401, 1404 clear and settle transactions for the clearing members 1402, 1405.

To facilitate the clearing and settlement of particular transactions, for instance for cross-border products, both clearing houses 1401 and 1404 are connected by a clearing link symbolized by line 1407 in Fig. 14.

The clearing link 1407 forwards all transactions which can be better handled by other clearing houses, for instance, transaction data of clearing house 1 (1401) are forwarded to clearing house 2 (1404). Clearing house 2 (1404) performs all clearing processes with the exception of risk and collateral management and potentially regulatory reporting. The second clearing house (1404) serves as a facilitator for clearing and settling transactions of particular products for the first clearing house (1401). While the connected clearing house 1404 calculates the fees, exercises assignments, processes delivery (notification, allocation and delivery), transfers positions and performs the give-up-procedures, the first clearing house 1401 preferably performs the margin management and the reporting. In this manner, each clearing house is handling those tasks for which it is better suited for.

The "peer-to-peer" relationship between two linked clearing houses as shown in Fig. 14 does not affect the relationship between the individual clearing houses and its clearing members, in particular with regard to risk management.

Although Fig. 14 describes a link of two clearing houses 1401 and 1404, each of these clearing houses may be connected to a plurality of other clearing houses. The particular role within the clearing and settlement procedure of individual clearing houses is outlined in the following.

The "primary clearing house" is that clearing house which is directly connected to the exchange generating a transaction to be settled.

The "home country clearing house" is that clearing house where the product underlying the transaction is naturally handled. For instance, US products are naturally settled by a US clearing house while a Euro product is naturally settled by a clearing house of the Euro region, for instance the Eurex clearing house.

The "destination clearing house" is that clearing house establishing connection to the clearing member. This clearing house has been denoted as "clearing member clearing house" in connection with the previously described embodiments. The destination clearing house is in particular responsible for the risk management process. This applies to the calculation of the initial margin and to the collateral pool which is held to cover initial margin requirements.

A transaction which is, for instance, based on a US product generated at a US exchange will have the US clearing house as "primary clearing house" and as "home country clearing house". However, the clearing member may be located in Europe and the European based clearing house (e.g. the Eurex clearing house) will then be the "destination clearing house".

One of the key functional principles applied by the clearing link is the " home country principle". The home country principle defines that a transaction is settled by a clearing house of that country or region where the product is naturally settled - irrespective of where and by whom the trade is executed. This principle aims to centrally pool open interest in a specific product, to ensure a fair option assignment and future allocation process as well as the use of existing settlement infrastructures.

The home country principle sets the rules for each product in the following areas: master settlement prices, end of clearing day (accounting cut), trade management, position management, exercise and assignment process for options and notification and allocation procedure for futures, variation margin calculation, cash management and banking facilities, delivery management and holiday calendars.

In addition to the home country principle with respect to the traded product, certain functions and processes are tied to the destination clearing house. The destination clearing house is responsible for the risk management process (excluding the variation margin processes) independent of where and by whom the trade is executed. This applies to the calculation of the initial margin and to the collateral pool which is held to cover initial margin requirements. The calculation of the variation margin and the cash settlement of variation margin are not performed by the destination clearing house, but by the home country clearing house. The home country clearing house is performing variation margin and cash settlement of the variation margin in order to make use of the existing cash infrastructure.

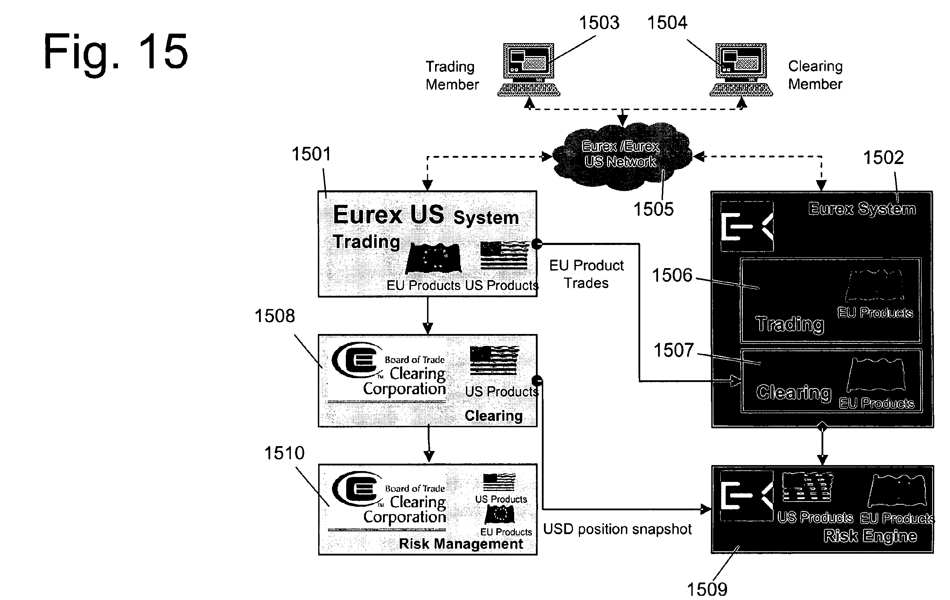

Compared to the first embodiment of the present invention, the scope for applying the home country principle has been extended while the application range of using the clearing member location has been reduced. According to the first embodiment, the clearing link ensures that the trade and position management processes are conducted in the destination clearing house whereas the home country clearing house is in charge to apply product related functions such as exercise, assignment, delivery and margin processes. This allows clearing members to re-use the existing infrastructure and to offer an integrated, transparent access to clearing. However, this requires harmonization of the connected clearing houses to a larger extent. In addition, an appropriate accounting requires to mirror the different processes leading to significant reconciliation efforts and timing requirements for data exchange. According to the modified embodiments described in connection with Fig. 14 and 15, the "adapted" home country principle defines to conduct trade and position management in the home country clearing house.

Fig. 15 illustrates in block-diagram form an example architecture for implementing the embodiment of Fig. 14. A US exchange denoted as "Eurex US system" 1501 generates transaction data either for Euro products (EU products) or US products. In a similar manner, the Eurex exchange 1506 of the Eurex system 1502 generates transaction data for Euro products. Although not shown, the Eurex system 1506 may also generate transactions based on US products.

Both systems 1501 and 1502 are connected to trading members 1503 and clearing members 1504 by means of a network which is generally represented by reference numeral 1505.

Generated trades are forwarded to the respective primary clearing houses 1508, 1507. Each of these primary clearing house 1508 and 1507 is responsible for settling the "home country products", i.e. the US clearing house 1508 is responsible for clearing and settling US products, while the Eurex clearing house 1507 is responsible for clearing and settling Euro based products.

In case the US exchange 1501 generates Euro based products, these products are cleared and settled in accordance with the home country principle by the Eurex clearing house 1507. For this purpose, the transaction data are either directly forwarded from the US exchange 1501 to the Eurex clearing house 1507. Alternatively, although not shown in Fig. 15, the transaction data of the Euro product stemming from the US exchange 1501 are forwarded to the Eurex clearing house 1507 by means of the US clearing house 1508.

As shown in blocks in 1509 and 1510, the risk management is covered by the destination clearing house. For the clearing members of the Eurex clearing house, the Eurex clearing risk management facilities 1509 are used for the purposes of margin (excluding variation margin) and collateral management. For all clearing members of the US clearing house 1508, the risk management is handled by the US clearing house as indicated by block 1510.

From the point of view of a trading member using a clearing member of the Eurex clearing house, the following applies:
The trading of US products is done by the US trading platform 1501.
The trade and position management is done by the clearing member of the Eurex clearing house 1507 on the US clearing house platform as a technical division account with the US clearing house 1508 acting as a facilitator.
The cash and delivery management is done on the US clearing house platform with the US clearing house 1508 acting as a facilitator.
The calculation of a variation margin is done on the US clearing house platform with the US clearing house 1508 acting as a facilitator.
The Eurex clearing house 1507 receives the position and trade information by means of an interface between the Eurex clearing house 1507 and the US clearing house 1508, for instance, by a file based position snapshot.
The risk management in terms of regional margin calculation in collateral management is done on the Eurex platform.
Intra-day risk management is only available during the up time of the Eurex platform and will based on intra-day snapshots of the US products provided by the US clearing house 1508.
Position keeping for US products is done at the US clearing house for both clearing members of the Eurex clearing house and US clearing house members.
The trade management for US product positions is executed on the US clearing house platform irrespective whether or not the clearing member is a clearing member of the Eurex clearing house 1507 or the US clearing house 1508.
At the time of the trade, the Eurex clearing house 1507 and the US clearing house 1508 step into the trade as central counterparties based on a simultaneous "novation". While the US clearing house 1508 steps in according to the primary clearing house principle, the Eurex clearing house 1507 steps in according to the destination clearing house principle.

The trade management functions will be performed by the US clearing house 1508 according to the home country principle, i.e. according to the US clearing house standards. The give-up and position transfer for US products are initiated and completed on the US clearing house platform, regardless whether or not the transaction involves two US clearing house clearing members, a US clearing house member and a Eurex clearing house member (cross-border) or two Eurex clearing house members. The US clearing house 1508 provides these services, in particular give-up, take-ups and position transfers, according to current US clearing standards and rules.

The position management for US product positions is to be executed on the US clearing house platform, regardless whether or not the clearing member is clearing member of the Eurex clearing or a US clearing house member.

The US clearing house 1508 does not calculate positions intra-day (except as a snapshot for risk management and pay/collect purposes). Consequently, no validation is performed when the position transaction is entered by the member against open positions. The possibility to enter a transaction in a specific trading phase or time limit is not restricted.

As a basic rule for cash management, the home country clearing house principle is applied. This means that the US clearing house 1508 will initiate all cash transactions in US dollars. The US clearing house 1508 will calculate the related cash transactions based on position and transaction information on the US clearing house platform. Cash management comprises the determination, processing, reporting and settlement of different cash transactions type. Cash transaction types are in scope variation margin, premium, cash settlement. Fees and fines.

Regarding delivery management, each clearing member is responsible for the delivery of all notifications and allocations effecting not only themselves but also the clients and trading members. This means that the clearing member is responsible for timely information or notification and allocations to clients and trading members.

Regarding the reconciliation process, this process ensures the integrity of the data across the involve platform. The following areas are most relevant for reconciliation between the US clearing house 1508 and the Eurex clearing house 1507, namely transactions and positions, cash balances, delivery obligations and fulfillment, cross-clearing house risk coverage and master data.

Regarding the risk management of a clearing house, the risk management comprises calculation of variation margins to compensate daily profits/losses, calculation (initial /original) margins to cover counter party risks, intra-day risk management to control intra-day risks, collateral management to secure margin requirements, and defense lines of the clearing house to cover the default of clearing member.

Although the above described example relates to the trade of Euro based products at a US exchange 1501, the underlying clearing and settlement approach is also applied vice versa, i.e. for US products traded at the Eurex exchange 1506.

Although the present invention has been described with respect to particular exchanges and products, the present invention is applicable to all types of trading locations e.g. electronic exchanges, open outcry exchanges and over-the-counter trading platforms, and for all types of products, e.g. cash equity and bond products, derivatives, and repurchase agreements (repo, commodities like energy and electricity).

Summarizing, the present invention relates to a clearing link connecting a plurality of clearing houses for settling transactions stemming from a trading platform. The clearing link processes transaction data stemming from the trading platform to be forwarded to individual clearing houses. The clearing house(s) are selected based on a transaction data analysis and predefined forward conditions. A trade member is thus able to select a clearing house not directly linked to the market of the trade member.

While the invention has been described with respect to the physical embodiments constructed in accordance therewith, it will be apparent to those skilled in the art that various modifications, variations and improvements of the present invention may be made in the light of the above teachings and with the purview of the appended claims without departing from the intended scope of the invention. In addition, those areas in which it is believed that those of ordinary skill in the art are familiar, have not been described herewith in order not to unnecessarily obscure the invention described herein. Accordingly, it is to be understood that the invention is not to be limited by the specific illustrative embodiments, but only by the scope of the appended claims.

## Claims

1. A clearing link apparatus connected to a plurality of clearing houses (340-360) for selecting a clearing house (340-360) there from to settle transactions stemming from an exchange (310-330) generating said transactions, comprising:
a data capture unit (400) for receiving transaction data of a transaction stemming from an exchange (310-330) generating said transaction, and
a transaction router (470) for forwarding said transaction data for settlement to a connected clearing house (340-360) in accordance with said received transaction data.

2. A clearing link apparatus according to claim 1, wherein said clearing link apparatus interconnecting a plurality of clearing houses (340-360).

3. A clearing link apparatus according to claim 1, wherein said clearing link apparatus connecting the exchange (310-330) generating said transactions to a plurality of clearing houses (340-360).

4. A clearing link apparatus according to claim 1, wherein said transaction data relate to a particular product traded at the exchange (310-330) and said transaction router (470) forwarding said transaction data to the clearinghouse (340-360) being a clearing house (340-360) where the traded product is naturally settled.

5. A clearing link apparatus according to claim 4, wherein said the traded product being naturally settled at a clearing house (340-360) of the country or region of origin of said traded product.

6. A clearing link apparatus according to claim 4, wherein said the traded products being either US based products or EURO based products and US based products being naturally settled at a US clearing house (340-360) while EURO based products being naturally settled at a EURO clearing house (340-360).

7. A clearing link apparatus according to claim 4, wherein said clearing house (340-360) selected for settling said transaction performing the steps of exercise assignment, delivery processing including notification, allocation and delivery, and position transfer.

8. A clearing link apparatus according to claim 4, wherein said transaction data being further processed at the clearing house (340-360) associated to said exchange (310-330) generating said transaction data.

9. A clearing link apparatus according to claim 8, wherein said clearing house (340-360) associated to said exchange (310-330) generating said transaction performing a risk management based on said transaction data.

10. A clearing link apparatus according to claim 1, wherein said transaction data indicating at least a trading member, a clearing member, a traded quantity, a product description, an execution price, an execution date, an execution time, and a trading location.

11. A clearing link apparatus according to claim 10, wherein said product description including a product title, and a product type.

12. A clearing link apparatus according to claim 11, wherein said product type indicating whether said product being an option or a future.

13. A clearing link apparatus according to claim 1, wherein said transaction data including at least product information and/or clearing information, and said clearing link apparatus further comprising a settlement director (460) for assigning the received transaction data in accordance with respective product information and/or clearing information to at least one of said connected clearing houses (340-360), and wherein said transaction router (470) forwarding said transaction data for clearing and settlement to at least one of said plurality of clearing houses (340-360) in accordance with said clearing house (340-360) assigned by said settlement director (460).

14. A clearing link apparatus according to claim 1, wherein said transaction data indicating a particular product underlying said transaction.

15. A clearing link apparatus according to claim 14, wherein each product having a country of origin.

16. A clearing link apparatus according to claim 1, wherein said clearing information indicating the clearing house (340-360) of the clearing member (CM) of said transaction.

17. A clearing link apparatus according to claim 1, wherein each clearing house (340-360) being operating in accordance with the clearing and settlement procedures prescribed by a home country clearing house .

18. A clearing link apparatus according to claim 1, wherein the exchange (310-330) generating the transactions has a single clearing house (340-360) associated thereto as execution platform.

19. A clearing link apparatus according to claim 13, wherein said settlement director (460) assigning said transaction data to that clearing house (340-360) of said plurality of clearing houses (340-360) operating under the clearing and settlement rules of the country of origin of the underlying product.

20. A clearing link apparatus according to claim 19, wherein said transaction data assigned and forwarded to the clearing house (340-360) operating under the clearing and settlement rules of the country of origin of the underlying product comprising detailed transaction information.

21. A clearing link apparatus according to claim 20, wherein said transaction information indicating at least a trading member, a clearing member, a traded quantity, a product description, an execution price, an execution date, an execution time, and a trading location.

22. A clearing link apparatus according to claim 21 wherein said product description including a product title, and a product type.

23. A clearing link apparatus according to claim 20, wherein said product type indicating whether said product being an option or a future.

24. A clearing link apparatus according to claim 20, wherein said settlement director (470) further assigning said transaction data to the clearing house (340-360) of the clearing member (CM).

25. A clearing link apparatus according to claim 20, wherein said settlement director (470) further assigning said transaction data to the clearing house (340-360) being the clearing house of the exchange (310-330) generating the transaction data.

26. A clearing link apparatus according to claim 13, wherein said settlement director (470) assigning said transaction data to the clearing house (340-360) being the clearing house of the exchange (310-330) generating the transaction data, to the clearing house (340-360) of the clearing member (CM), and to the clearing house (340-360) operating under the clearing and settlement rules of the country of origin of the product underlying said transaction.

27. A clearing link apparatus according to claim 26, wherein said settlement director (470) generating individual data containers from said transaction data, said data containers are to be forwarded to the said assigned clearing houses (340-360).

28. A clearing link apparatus according to claim 13, wherein said trade capture component (400) further capturing cash moves.

29. A clearing link apparatus according to claim 13, wherein said trade capture component (400) obtaining product identification data, execution date data, and the trading member data for each transaction.

30. A clearing link apparatus according to claim 13, further comprising a translator component (410, 420) for receiving the transaction data obtained by said trade capture component (400) from said plurality of connected exchanges (310-330) and converting said data into a predetermined data format.

31. A clearing link apparatus according to claim 30, wherein said translator component (410,420) comprising a data base of relevant identification data, and said translator component (410,420) enriching individual parts of said transaction data from said data base in order complete the indications of the converted data.

32. A clearing link apparatus according to claim 31, wherein said indications include the indication of relevant clearing member identifications and/or trading member identifications.

33. A clearing link apparatus according to claim 13, further comprising a product translator component (430) comprising a data base of product specific data for enriching transaction data received from said trade capture component (400).

34. A clearing link apparatus according to claim 13, further comprising a calendar organizer component (440) for translating all transaction date data stemming from different exchanges (310-330) into a common date format.

35. A clearing link apparatus according to claim 34, wherein said calendar organizer component (440) further comprising a data base providing holiday data of a plurality of exchanges (310-330) and calculating corrected execution date data of received transaction data based on said holiday data.

36. A clearing link apparatus according to claim 13, comprising a transaction data completor component (450) for receiving the transaction data obtained by said trade capture component (400) and additional data separately enriching individual parts of said transaction data.

37. A clearing link apparatus according to claim 13, wherein said settlement director (460) analyzing transaction data with respect to the product, the transaction member, and the clearing member and providing at least one data container comprising a selection of said transaction data.

38. A clearing link apparatus according to claim 31, wherein said settlement director (460) providing different data containers to be forwarded to different clearing houses (340-360), said data containers comprising different subsets of data of said transaction data.

39. A clearing link apparatus according to claim 38, wherein said transaction router (470) forwarding the individual data containers to the respective clearing houses (340-360).

40. A clearing link apparatus according to claim 13, further comprising a trouble shooter component (520) for receiving undeliverable transaction data from the transaction router (470) and initiating an alarm upon receiving an undeliverable transaction data.

41. A clearing link apparatus according to claim 13, further comprising a quality reviewer component (510) for reviewing the processed transaction data for correctness and initiating an alarm upon detecting unmatched transaction details.

42. A clearing link apparatus according to claim 13, further comprising a position capture unit (630) for receiving next day transaction data (640) representing a transaction generated during a non-operable time period of a clearing house (340-360).

43. A clearing link apparatus according to claim 42, further comprising a risk manager (670) for receiving said next day transaction data (640) and calculating a risk for said non-operable clearing house (340-360) resulting from said next day transaction data.

44. A clearing link apparatus according to claim 43, wherein said risk manager (670) initiating an alarm when said calculated risk exceeding a predefined level.

45. A clearing link apparatus according to claim 42, further comprising a reconciliation processor (680), wherein said position capture unit (630) receiving all transaction data of a predefined time period prior to entering said non-operable state by a clearing house (340-360) and said reconciliation processor (680) checking the reliability of transaction data stemming from different clearing houses (340-360).

46. A clearing link apparatus according to claim 13, wherein said trade capture unit (400), said settlement director (460) and said transaction router (470) are provided at each connected exchange (310-330) for forwarding transactions stemming from the connected exchange (310-330) to a clearing house (340-360).

47. A clearing link apparatus according to claim 13, wherein said trade capture unit (400), said settlement director (460) and said transaction router (470) are provided at each clearing house (340-360) associated to one of said plurality of exchanges (310-330) for forwarding transaction data stemming from the respective exchange (310-330) to a clearing house (340-360).

48. A clearing link interface connected to a plurality of clearing houses (340-360) for assigning a clearing house (340-360) therefrom for clearing and settling transactions stemming from a trading platform (310-330) generating said transactions, comprising:
a first means (400) for receiving transaction data of a transaction stemming from a trading platform (310-330) generating said transaction, and
a second means (470) for assigning said transaction data for settlement to a connected clearing house (340-360) based on said received transaction data.

49. A clearing link interface according to claim 48, wherein said clearing link interface being part of one of said clearing houses (340-360) and connecting said clearing house (340-360) to at least one additional clearing houses (340-360).

50. A clearing link interface according to claim 48, wherein said clearing link interface being part of or connected to the trading platform (310-330) generating said transaction and connecting said trading platform (310-330) to a plurality of clearing houses (340-360).

51. A clearing link interface according to claim 48, wherein said transaction data relate to a particular product traded at the trading platform (310-330) and said second means (470) assigns said transaction data to the clearinghouse (340-360) being a clearing house (340-360) where the traded product is naturally settled.

52. A clearing link interface according to claim 51, wherein said the traded product being naturally settled at a clearing house (340-360) of the country or region of origin of said traded product.

53. A clearing link interface according to claim 51, wherein said the traded products being either US based products or EURO based products and US based products being naturally settled at a US clearing house (340-360) while EURO based products being naturally settled at a EURO clearing house (340-360).

54. A clearing link interface according to claim 48, wherein said clearing house (340-360) selected for settling said transaction performing the steps of exercise assignment, delivery processing including notification, allocation and delivery, and position transfer.

55. A clearing link interface according to claim 51, wherein said transaction data being further processed at the clearing house (340-360) associated to said trading platform (310-330) generating said transaction data.

56. A clearing link interface according to claim 55, wherein said clearing house (340-360) associated to said trading platform (310-330) generating said transaction performing a risk management based on said transaction data.

57. A clearing link interface according to claim 48, wherein said transaction data indicating at least a trading member, a clearing member, a traded quantity, a product description, an execution price, an execution date, an execution time, and a trading location.

58. A clearing link interface according to claim 57, wherein said product description including a product title, and a product type.

59. A clearing link interface according to claim 58, wherein said product type indicating whether said product being an option or a future.

60. A clearing link interface according to claim 48, comprising:
trade capture means (400) for receiving transaction data stemming from said connected trading platform (310-330), said transaction data including at least product information and/or clearing information,
settlement means (460) for assigning the received transaction data in accordance with respective product information and/or clearing information to at least one of said connected clearing houses (340-360), and
routing means (470) for forwarding transaction data for clearing and settlement to at least one of said plurality of clearing houses (340-360) in accordance with said clearing house (340-360) assigned by said settlement means (460).

61. A clearing link interface according to claim 60, wherein said transaction data indicating a particular product underlying said transaction.

62. A clearing link interface according to claim 60, wherein said clearing information indicating the clearing house (340-360) of the clearing member (CM) of said transaction.

63. A clearing link interface according to claim 60, wherein each clearing house (340-360) being operating in accordance with the clearing and settlement procedures prescribed by a home country clearing house .

64. A clearing link interface according to claim 60, wherein said trading platform (310-330) having a single clearing house (340-360) associated thereto as clearing platform and said clearing link interface being connected to said trading platform (310-330) through said associated clearing house (340-360).

65. A clearing link interface according to claim 60, wherein said settlement means (460) assigning said transaction data to that clearing house (340-360) of said plurality of clearing houses (340-360) operating under the clearing and settlement rules of the country of origin of the underlying product.

66. A clearing link interface according to claim 65, wherein said transaction data assigned and forwarded to the clearing house (340-360) operating under the clearing and settlement rules of the country of origin of the underlying product comprising detailed transaction information.

67. A clearing link interface according to claim 60, wherein said settlement means (470) assigning said transaction data to that clearing house (340-360) of said plurality of clearing houses (340-360) indicated in the clearing information of said transaction data.

68. A clearing link interface according to claim 60, wherein said settlement means (470) assigning said transaction data to the clearing house (340-360) of the clearing member (CM).

69. A clearing link interface according to claim 60, wherein said settlement means (470) assigning said transaction data to the clearing house (340-360) being the being the clearing house of the trading platform (310-330) generating the transaction data.

70. A clearing link interface according to claim 60, wherein said settlement means (470) assigning said transaction data to the clearing house (340-360) being the clearing house of the trading platform (310-330) generating the transaction data, to the clearing house (340-360) of the clearing member (CM), and to the clearing house (340-360) operating under the clearing and settlement rules of the country of origin of the product underlying said transaction.

71. A clearing link interface according to claim 60, wherein said settlement means (470) generating individual data containers from said transaction data, said data containers are to be forwarded to the said assigned clearing houses (340-360).

72. A clearing link interface according to claim 60, wherein said trade capture component (400) further capturing cash moves.

73. A clearing link interface according to claim 60, wherein said trade capture means (400) obtaining product identification data, execution date data, and the trading member data for each transaction.

74. A clearing link interface according to claim 60, further comprising translator means (410, 420) for receiving the transaction data obtained by said trade capture means (400) from said connected trading platform (310-330) and converting said data into a predetermined data format.

75. A clearing link interface according to claim 74, wherein said translator means (410,420) comprising a data base of relevant identification data, and said translator means (410,420) enriching individual parts of said transaction data from said data base in order complete the indications of the converted data.

76. A clearing link interface according to claim 75, wherein said indications include the indication of relevant clearing member identifications and/or trading member identifications.

77. A clearing link interface according to claim 60, further comprising product translator means (430) comprising a data base of product specific data for enriching transaction data received from said trade capture means (400).

78. A clearing link interface according to claim 60, further comprising calendar organizer means (440) for translating all transaction date data stemming from said trading platform (310-330) into a predefined common date format.

79. A clearing link interface according to claim 78, wherein said calendar organizer means (440) further comprising a data base providing holiday data for a plurality of trading platform (310-330) generating transaction data and calculating corrected execution date data of received transaction data based on said holiday data.

80. A clearing link interface according to claim 60, comprising a transaction data completor means (450) for receiving the transaction data obtained by said trade capture means (400) and additional data separately enriching individual parts of said transaction data.

81. A clearing link interface according to claim 60, wherein said settlement director (460) analyzing transaction data with respect to the product, the transaction member, and the clearing member and providing at least one data container comprising a selection of said transaction data.

82. A clearing link interface according to claim 60, wherein said settlement means (460) providing different data containers to be forwarded to different clearing houses (340-360), said data containers comprising different subsets of data of said transaction data.

83. A clearing link interface according to claim 82, wherein said routing means (470) forwarding the individual data containers to the respective clearing houses (340-360).

84. A clearing link interface according to claim 60, further comprising a trouble shooter means (520) for receiving undeliverable transaction data from said routing means (470) and initiating an alarm upon receiving an undeliverable transaction data.

85. A clearing link interface according to claim 60, further comprising reviewing means (510) for reviewing the processed transaction data for correctness and initiating an alarm upon detecting unmatched transaction details.

86. A clearing link interface according to claim 60, further comprising a position capture means (630) for receiving next day transaction data (640) representing a transaction generated during a non-operable time period of a clearing house (340-360).

87. A clearing link interface according to claim 86, further comprising a risk analyzing means (670) for receiving said next day transaction data (640) and calculating a risk for said non-operable clearing house (340-360) resulting from said next day transaction data.

88. A clearing link interface according to claim 87, wherein said risk analyzing means (670) initiating an alarm when said calculated risk exceeding a predefined level.

89. A clearing link interface according to claim 86, further comprising a reconciliation calculation means (680), wherein said position capture means (630) receiving all transaction data of a predefined time period prior to entering said non-operable state by a clearing house (340-360) and said reconciliation calculation means (680) checking the reliability of transaction data stemming from different clearing houses (340-360).

90. A method for connecting a plurality of clearing houses (340-360) for clearing and settlement of transactions stemming from an exchange (310-330), comprising the steps of:
receiving (S1) transaction data stemming from the exchange (310-330) generating said transaction, and
assigning (S2) the transaction data for clearing and settlement to at least one of said plurality of clearing houses (340-360) in accordance with said transaction data.

91. A method according to claim 90, wherein said method interconnects said plurality of clearing houses (340-360) for assigning transaction data from an exchange (310-330) connected to one of said plurality of clearing houses (340-360).

92. A method according to claim 90, wherein said method connects the exchange (310-330) generating said transactions to said plurality of clearing houses (340-360).

93. A method according to claim 90, wherein said step of assigning (S2) the received transaction data is performed in accordance with respective product information and/or clearing information included in said transaction data, and wherein said method further comprises the step of forwarding (S3) the transaction data for clearing and settlement to at least one of said plurality of clearing houses (340-360) in accordance with said assigned clearing house (340-360).

94. A method according to claim 90, wherein said transaction data indicating a particular product underlying said transaction.

95. A method according to claim 94, wherein each product having a country of origin.

96. A method according to claim 93, wherein said clearing information indicating the clearing house (340-360) of the clearing member (CM) of said transaction.

97. A method according to claim 90, wherein each clearing house (340-360) being operating in accordance with the clearing and settlement procedures prescribed by a clearing house home country.

98. A method according to claim 90, wherein each exchange (310-330) having a single clearing house (340-360) associated thereto as execution platform.

99. A method according to claim 90, wherein said transaction data being assigned to that clearing house (340-360) of said plurality of clearing houses (340-360) operating under the clearing and settlement rules of the country of origin of the underlying product.

100. A method according to claim 99, wherein said transaction data assigned to the clearing house (340-360) operating under the clearing and settlement rules of the country of origin of the underlying product comprising detailed transaction information.

101. A method according to claim 90 wherein said transaction data indicating at least a trading member, a clearing member, a traded quantity, a product description, an execution price, an execution data, an execution time, and a trading location.

102. A method according to claim 101, wherein said product description including a product title, and a product type.

103. A method according to claim 102, wherein said product type indication whether said product being an option or a future.

104. A method according to claim 99, wherein said transaction data being further assigned to the clearing house (340-360) of the clearing member (CM).

105. A method according to claim 99, wherein said transaction data being further processed at that clearing house (340-360) being the clearing house of the exchange (310-330) generating the transaction data.

106. A method according to claim 90, wherein said transaction data being processed at the clearing house (340-360) being the clearing house of the exchange (310-330) generating the transaction data, and being forwarded to the clearing house (340-360) of the clearing member (CM), and to the clearing house (340-360) operating under the clearing and settlement rules of the country of origin of the product underlying said transaction.

107. A method according to claim 90, wherein said step (S1) of receiving transaction data comprising the step of capturing cash moves.

108. A method according to claim 90, wherein said step (S1) of receiving transaction data comprising the step of obtaining product identification data, execution date data, and the trading member data for each transaction.

109. A method according to claim 90, further comprising step converting (S11) said received transaction data into a predetermined data format.

110. A method according to claim 90, wherein said conversion step (S11) enriching individual parts of said transaction data from a data base in order complete the indications of the converted data.

111. A method according to claim 110, wherein said indications include the indication of relevant clearing member identifications and/or trading member identifications.

112. A method according to claim 90, further comprising the step of enriching received transaction data based on product specific data.

113. A method according to claim 90, further comprising the step translating (S12) all transaction date data stemming from different exchanges (310-330) into a common date format.

114. A method according to claim 90, further comprising the step of correcting (S12) execution date data of received transaction data based on holiday data from a data base providing holiday data of a plurality of exchanges (310-330) and/or clearing houses (340-360).

115. A method according to claim 90, further comprising the step of combining (S13) the received transaction data and additional data separately enriching individual parts of said transaction data.

116. A method according to claim 90, further comprising the step of analyzing (S14) each transaction data with respect to the product, the transaction member, and the clearing member and providing (S15;S16;S17) at least one data container comprising a selection of the transaction data.

117. A method according to claim 90, wherein said forwarding step (S3, S18-S20) providing different data containers to be forwarded to different clearing houses (340-360), said data containers comprising different subsets of data of said transaction data.

118. A method according to claim 117, further comprising the step of forwarding (S18-S20) an individual subset of said transaction data to different clearing houses (340-360).

119. A method according to claim 90, further comprising the step of initiating an alarm upon noting that transaction data are undeliverable.

120. A method according to claim 90, further comprising the step of reviewing the processed transaction data for correctness and initiating an alarm upon detecting unmatched transaction details.

121. A method according to claim 90, further comprising the step of receiving next day transaction data (640) representing a transaction generated during a non-operable time period of a clearing house (340-360).

122. A method according to claim 121, further comprising the step of calculating a risk for said non-operable clearing house (340-360) resulting from said next day transaction data.

123. A method according to claim 122, further comprising the step of initiating an alarm when said calculated risk exceeding a predefined level.

124. A method according to claim 121, further comprising the step of receiving all transaction data of a predefined time period prior to entering said non-operable state by a clearing house (340-360) and checking the reliability of transaction data stemming from different clearing houses (340-360).

125. A computer program comprising code means adapted to perform all steps of claim 90.

126. A computer program product comprising a computer readable medium having computer readable program code embodied thereon, said program code being adapted to carry out all steps of claim 90.
